# EUROPEAN PATENT SPECIFICATION

(11) **EP 3 335 211 B1**
(45) Date of publication and mention of the grant of the patent: **07.09.2022**
(21) Application number: 16756742.9
(22) Date of filing: 18.07.2016
(51) Int. Cl.: G08G 5/00, G06Q 30/00

(54) **AN AIRCRAFT CONTROLLED BY A SECURE INTEGRATED AIRSPACE MANAGEMENT SYSTEM**
DURCH EIN SICHERES INTEGRIERTES LUFTRAUMVERWALTUNGSSYSTEM GESTEUERTES FLUGZEUG
ENGIN VOLANT COMMANDÉ PAR UN SYSTÈME DE GESTION INTÉGRÉE ET SÉCURISÉE DE L'ESPACE AÉRIEN

(30) Priority: 17.07.2015 GB 201512639; 28.09.2015 GB 201517065; 26.10.2015 GB 201518883; 30.10.2015 GB 201519218; 03.11.2015 GB 201519380; 03.12.2015 GB 201521363; 12.02.2016 GB 201602534
(43) Date of publication of application: 20.06.2018
(73) Proprietor: RelmaTech Limited, Eastleigh SO53 1DZ (GB)
(72) Inventor: BROWN, Simon, Virginia Water GU25 4RR (GB); HALL, Philip, Virginia Water GU25 4RR (GB); BRIDLE, Owen, St. Neots PE19 6SH (GB)
(74) Representative: Langley, Peter James
(86) International application number: PCT/GB2016/052170
(87) International publication number: WO 2017/013417

(56) References cited:
- EP-A2- 2 648 174
- WO-A1-2016/154949
- US-A1- 2012 022 719
- US-A1- 2014 018 976
- US-A1- 2015 066 342

## Description

### BACKGROUND OF THE INVENTION

### 1. Field of the Invention

The field of the invention relates to a secure integrated airspace management (SIAM) system; and to that SIAM system.

### 2. Technical Background and Related Art

Remotely Piloted Aircraft Systems (RPAS) - sometimes called Unmanned Aircraft Systems (UAS), Unmanned Airborne Vehicles (UAVs), Remotely Piloted Airborne Vehicles (RPAVs), or simply 'drones' - are an area of emerging technology that is gaining increasing worldwide notoriety in both civilian and military contexts.

Drone numbers and drone applications are increasing rapidly and the sky is becoming more congested with UAVs. With more drones in the US than manned aircraft already, it is clear that this issue will only get worse. Therefore an airspace management system for low flying aircraft (i.e. below 152,4 m (500 feet)) is required very quickly. The drone industry is calling for a global standard airspace management system to facilitate safe integration for all, rather than a variety of systems with the inherent compatibility risks and demands.

To protect the flying public, RPAS must be fully incorporated into National Airspace Management so that they are visible to Air Traffic Controllers and general, commercial, and business aviation/aircraft. However, unsecured RPAS control channels and/or clear channel recordings of what they see are vulnerable to significant adverse exploitation. In addition, existing regulations covering collision avoidance in civil aircraft operations need to be reviewed by regulators to ensure RPAS operations meet safe aircraft separation standards. Specific collision avoidance requirements for RPAS operations may also need to be established that recognise the capabilities of new and emerging technologies (such as camera, infrared, acoustic sensor) being considered in the development of autonomous sense-and avoid manoeuvring systems. Importantly therefore, governments must also adopt policies that assure the integrity of RPAS control security is established and maintained in all conditions and operational scenarios, and that RPAS control and flight safety is demonstrated before airspace integration is considered.

Special emphasis must also be placed on spectrum management on intra and inter-system interactions (platform integration), mission specific data security and bandwidth requirements, and robust performance in the presence of high intensity radiated fields (HIRF). RPAS applications will use significant radio bandwidth for telemetry from the RPAS, particularly for real time imagery. Since many recreational and light-commercial RPAS will operate at an altitude under 152,4 m (500 feet), the effect of altitude will result in impacts on other users of the same frequency within a foot print that increases in size with RPAS altitude. Poorly planned choices of spectrum for RPAS could impact adversely other aeronautical spectrum users as well as unlicensed users and cellular radiotelephone systems that were planned assuming users were purely terrestrial. Thus an integral part of authorizing RPAS must include an explicit selection of frequencies that are selected based on acceptable impact on other operations. Policy directives should therefore fully exploit existing aviation, telecommunication, and security standards and regulations where appropriate by extending those in place, or require the development of new standards and regulations where current ones are inadequate.

Near collisions with commercial aircraft and numerous other high profile incidents have become major problems for regulators and the developing drone industry. There is universal acceptance that something needs to be done - and soon. Essential to the growth and prosperity of the industry is the implementation of a secure, safe and universal airspace management system for civilian RPAS operations; a system that addresses the concerns and issues of policy makers and the public, and meets the needs of regulators and law enforcement agencies. Until now, such an airspace management system did not exist, and various government funded projects working to develop a solution have indicated recently that one would not be available until 2019.

While RPAS can be an effective and efficient means of conducting particular operations for national security and social good, and are considered to have significant potential for a wide range of commercial applications, there are also many risks and issues that need to be acknowledged and addressed.

Recent forums including the International Civil Aviation Organisation (ICAO) Remotely Piloted Aircraft Systems (RPAS) Symposium held in Montreal (23-25 March 2015) and two exclusive seminars organised by IEEE in conjunction with several Australian and United States academic institutions (29-30 September 2014 in Melbourne, Australia and 20-21 March 2015 in Washington DC, USA) to consider the National Security and Societal Implications of Remotely Piloted Airborne Vehicles and Related Technologies, highlighted two overarching issues. Firstly, how can the forecast proliferation of RPAS operated by private enthusiasts and commercial enterprises be safely managed in the airspace below 152.4 m (500 feet); and more critically, how can the accompanying need to be able to establish the owner of an RPAS and the identity of its pilot (noting that the owner of the aircraft may or may not be the pilot of that aircraft) be best achieved within the context of a secure integrated airspace management system.

The strategic trends in RPAS development and the implications, good and bad, of what the next decade will bring to their operation in (or against) the national interest, convey with them many issues, positive and negative. These issues can be effectively considered in the normal strategic context of the National Interest, by splitting that general concept into its three constituent elements - National Security, Economic Prosperity and Social Values.

**National Security:** The use of RPAS for military surveillance purposes is well established, but the next decade will see the 'weaponising' of even small, easily available unmanned airborne systems as well as the development of high precision, beyond line of sight (BLOS) control and navigation technologies. In the right hands, such capabilities can both enhance the defence of a nation's people and assets by dramatically reducing collateral civilian death and damage; in the wrong hands, however, another dimension is added to terrorist attacks - lightweight, loitering, self-navigated air vehicles - deadly, hard to detect, cheap, and potentially overcoming defensive efforts by swarming.

**Economic Prosperity:** There is currently an explosion of interest in the commercial use of RPAS in many sectors. The positive economic effect in the next decade will be limited only by industry imagination and the ability of regulations to be an enabler rather than an inhibitor. Current air safety regulations at international and national levels are a poor fit for the safety issues associated with remotely piloted aircraft of the sophistication and capability now widely available or being contemplated. RPAS now in operation range in size from 28.35 grams (one ounce) to about 50 tonnes, and several international companies are well advanced in their plans to deliver their services by remotely piloted aircraft. Such developments are forcing regulators to urgently address the safety and regulatory implications and requirements associated with commercial RPAS operations. However, for every positive scenario, a mirror image can be postulated; RPAS being used to threaten, or even destroy, key national economic assets would amount to blackmail on an industrial scale.

**Social Values:** This is already an area of opportunity and controversy. Smaller RPAS, such as 'quadcopters' and large-scale remote-controlled aircraft, have also become much more readily available and affordable for hobby and sports enthusiasts, which in turn have raised societal concerns on their use and the intent and competency of their owner/operators. Surveillance, from RPAS and more broadly, raises important questions about privacy and the right to be unobserved, to liability for damage or harm to physical and personal property in the evident of equipment malfunction or human (pilot) error. Future quieter, longer endurance, multiple-sensor small RPAS will contribute to the effectiveness of first responders - police, fire and ambulance - but equally have the potential for negative covert surveillance, fuelling the privacy debate and enabling organized crime. Equally, drugs for good may well be despatched to crisis points by RPAS, and illegal drugs flown across borders in the same way.

In order to address the national security and societal challenges and implications of the rapidly expanding use and sophistication of RPAS and their related technologies, and to achieve an effective and efficient commercialization of RPAS applications, governments must adopt policies that balance the rights and responsibilities of the individual with public sector capabilities and private-sector growth. Those policies need to consider the properties of RPAS, the different types of unmanned aircraft and aerial systems currently being deployed or in development, the challenges and risks posed by the private and commercial use of RPAS, safety regulations as applied to the manufacture and civilian use of RPAS, issues of privacy and the nature of surveillance and other RPAS missions and how these impact on important national security and societal values. US2012/022719A1 discloses systems and methods for detecting and managing the unauthorized use of an unmanned aircraft. The publication WO2016154949 is an intermediate document which constitutes prior art solely for the purpose of Article 54(3) EPC.

### SUMMARY OF THE INVENTION

According to a first aspect of the invention, there is provided a secure integrated airspace management system, the secure integrated airspace management system including one or more secure global registries or databases storing:
(i) unique digital aircraft identification numbers ("aircraft IDs");
(ii) details of each registered owner of an aircraft ("owner IDs");
(iii) details of each pilot of an aircraft ("pilot IDs");
in which the secure integrated airspace management system is configured to receive, prior to a flight, data from an authentication module in an aircraft declaring the identity of its pilot ("pilot ID") and the identity of the aircraft ("aircraft ID"), in which the aircraft ID is an International Mobile Equipment Identity based format number; and the secure integrated airspace management system is configured to then validate and authenticate the aircraft against information stored in the secure global registries or databases and to send a signal authorizing the aircraft to fly, and without which that aircraft is not permitted to fly; and in which the secure integrated airspace management system is configured to receive, from a communications module in each aircraft it has validated and authenticated, location data, such as the heading, position, speed and altitude, so that the secure integrated airspace management system can track all of these aircraft.

According to a second aspect of the invention, there is provided a system according to claim 9 including the secure integrated airspace management system of any of Claims 1 to 8, the system including the aircraft.

### Concept A - the aircraft

The disclosure includes an aircraft comprising:
(i) an authentication module and (ii) a communications module;
   in which the authentication module (a) stores an identity uniquely associated with or identifying a specific pilot or operator ("pilot ID") and (b) sends that pilot ID, or data related to the pilot ID, to the communications module; and the communications module sends that pilot ID, or related data, to a secure integrated airspace management (SIAM) system that determines whether the pilot or operator is permitted to fly that aircraft and, if it is permitted, then the communications module receives from the SIAM an authorisation signal that permits the aircraft to operate.

### Aircraft ID features

- Aircraft stores a unique aircraft identifier ("aircraft ID") and sends that aircraft ID, or data related to that aircraft ID, via the communications module to the SIAM prior to the authorization signal being sent by the SIAM and the SIAM then determines whether the aircraft is permitted to fly and, if it is permitted, then the communications module receives from the SIAM an authorisation signal that permits the aircraft to operate.
- aircraft ID identifies or is linked to the owner or controller of the aircraft,
- aircraft ID is an IMEI based format number,
- aircraft ID, or related data, is regularly or occasionally transmitted back to the SIAM during flight

### Authentication module features

- authentication module is or includes a standard or commodity cellular communications authentication device
- authentication module is or includes a smartcard
- authentication module is, at least in part, removable from the aircraft and the removable part must be inserted into aircraft electronics to enable flight
- authentication module is or includes a SIM card
- SIM card is removable from the aircraft and must be inserted into aircraft electronics to enable flight
- SIM card is embedded into the aircraft
- authentication module must be registered with the SIAM system and activated in order to be operational
- Pilot ID stored on the authentication module is an IMSI or similar sort of unique number
- The SIAM authenticates the IMSI or similar sort of unique number
- authentication module reads the aircraft ID and the Pilot ID and sends that data, or encrypted versions of that data, to the SIAM.
- SIAM checks the aircraft ID and the pilot ID and, if validated, sends the authentication signal to the aircraft which the communications module receives
- authentication module stores privileges or permissions defining where or how the pilot or operator can fly the aircraft
- authentication module must be both present in the aircraft and validated and authenticated by the SIAM system before the aircraft can be flown
- authentication module comprises (i) a reader device located in the aircraft and (ii) a remote key that stores data uniquely associated with or identifying a person responsible for controlling the vehicle
- where the key is a remote key, then it is provided to the reader by an app running on a smartphone or other computing device
- authentication module further includes an identity uniquely associated with or identifying a person responsible for maintaining the aircraft

### Communications module features

- communications module is an embedded mobile module
- the embedded mobile module is a standard or commodity cellular communications module using a standard interface, such as 2G, 3G, 4G or 5G
- communications module interfaces with, or is integral with, or uses or enables the use of location date from, one or more of the following: a GPS or GNSS location module in the aircraft; GSM or other cellular standard tower mapping data; Wi-Fi mapping data; Bluetooth and LoRA mapping data
- communications module stores the unique aircraft ID
- communications module transmits real-time GPS or GNSS location data to the SIAM system so the SIAM system can track the aircraft
- the location data includes the heading, position, speed and altitude of the aircraft

### SIAM features

- SIAM system includes elements that are local to the aircraft, or at a remote server, or some distributed combination of the two,
- a SIAM server communicates with a SIAM application in the aircraft
- the local, aircraft-based SIAM application is in the authentication module
- the local, aircraft-based SIAM application is on the SIM card authentication module and shares the same security level as a GSM application, or other cellular communications application, on the SIM card
- the local, aircraft-based SIAM application is used to validate and authenticate the pilot to the SIAM system
- the SIAM system can revoke permission for a specific flight or pilot at any time, in which case an aircraft if in the air will be required or requested or controlled to return to land or if still on the ground will be prevented from flying
- the SIAM system stores an updateable list of hard and soft no fly zones
- the SIAM system sends to the aircraft a list of hard and soft no fly zones which are remotely updateable and which the aircraft is programmed to avoid
- the SIAM system stores an updateable list of permitted flight paths and regions which the aircraft is programmed to use
- The SIAM system logs any airspace breaches by the aircraft

### Context features

- Aircraft is an unmanned aerial vehicle or drone
- Aircraft is an autonomous aerial vehicle or drone
- Aircraft is a delivery drone
- Aircraft is a civilian aircraft, such as a light aircraft

### Generalising Concept A to any vehicle, not just aircraft

A vehicle comprising:
(i) an authentication module and (ii) a communications module;
   in which the authentication module (a) stores an identity uniquely associated with or identifying a specific pilot, driver or operator of the vehicle ("driver ID") and (b) sends that driver ID or data related to the driver ID to the communications module; and
   the communications module sends that driver ID or related data to a secure integrated traffic management (SITM) system that determines whether the pilot, driver or operator is permitted to operate that vehicle and, if it is permitted, then the communications module receives from the SITM an authorisation signal that permits the vehicle to operate.

The following optional features may be implemented:
- Vehicle is an aircraft
- Vehicle is a maritime vehicle
- Vehicle is a land-based vehicle, such as a car, truck or delivery robot

### Concept B - the SIAM

Another aspect of the disclosure is a secure integrated airspace management (SIAM) system including one or more secure global registries or databases storing:
(i) unique digital aircraft identification numbers ("aircraft IDs");
(ii) details of each registered owner of an aircraft ("owner IDs")
(iii) details of each registered pilot ("pilot IDs")
and in which the SIAM system receives, prior to a flight data, from an aircraft declaring the identity of its pilot and then validates and authenticates the pilot and sends a signal authorizing the aircraft to fly, and without which that aircraft cannot fly.

The following optional features may be implemented:
- Global registry or database stores details of all flight plans for any flights that are not line-of-sight flights and accepts, modifies or rejects the flight plans prior to permitting flight.
- SIAM logs all no-fly zones and compares flight plans and current flight path trajectories with no-fly zones and prevents the authentication signal from being sent of there is a conflict or sends an explicit 'no-fly' signal.
- The SIAM manages airspace below a defined height (such as 152.4 m (500 feet)) by enabling the identification of an aircraft, its ownership and the pilot in control.
- The SIAM system receives and logs regular transmissions including pilot ID, and aircraft ID, and aircraft position, heading, speed and altitude
- SIAM sends aircraft identification, and aircraft location (including position, heading, speed and altitude) data to an airspace or air traffic management system
- The SIAM system sends a SMS message to a pilot of an unmanned aircraft if the pilot's aircraft approaches a pre-defined distance of a no fly zone.
- The SIAM system sends a SMS message to a pilot of an unmanned aircraft if the pilot's aircraft is on a collision course
- The SIAM is connected to a radar system that detects all aircraft in a region and provides to the radar system location information for all aircraft which it has authenticated, enabling the radar system to determine any aircraft which are not authenticated.
- The SIAM records all incidents affecting an aircraft, such as airspace breaches
- The SIAM initiates an intervention in the flight of an aircraft, including: forcing the aircraft to return to its base; forcing the aircraft to return to its pilot; forcing the aircraft to descend to ground.
- Aircraft is as defined in Concept A above
- The SIAM features defined above

### Concept C - the pilot authorisation method

A final aspect of the disclosure is a method of authorizing a pilot or operator to operate an aircraft, comprising the steps of:
(i) providing the pilot with a unique authorization key in software or hardware;
(ii) the pilot supplying the unique authorization key to an aircraft he intends to fly;
(iii) the unique authorization key permits authenticated and encrypted data communications with an integrated secure airspace management (SIAM) system that validates and authenticates the pilot of the aircraft and sends, in response to the authorization key, a unique signal to the aircraft that authorizes the aircraft to fly.

The following optional features may be implemented:
- Pilot can only acquire a unique authorization key from a licensed key retailer
- Aircraft is as defined in Concept A
- The method includes the following steps: get the unique aircraft identifier; get the public key of the SIAM service from the live server; use the SIAM public key to encrypt and send the unique aircraft identifier and Pilot ID to the SIAM service; the SIAM service then looks up the unique aircraft identifier, finds the related crypto key and generates a random number to produce a signed response and stores this signed response; the SIAM server then sends the random number to an authentication module which produces a signed response and a public key; the signed response and the public key is passed to the SIAM server for validation; if validated, the SIAM server then sends a temporary registration certificate to the aircraft.

### BRIEF DESCRIPTION OF THE FIGURES

Aspects of the invention will now be described, by way of example(s), with reference to the following Figures, which each show features of the invention:
- **Figure 1**: is a diagram showing the main high-level components of the system.
- **Figure 2**: is a diagram illustrating the modular functionality, registers and databases of the system.
- **Figure 3**: is a diagram illustrating a server architecture layout.
- **Figure 4**: shows a diagram illustrating different SIAM aircraft modules.
- **Figure 5**: shows a table with examples of Key categories for potential users.
- **Figure 6**: shows an architecture diagram of a SIAM system.
- **Figure 7**: shows an overview of the RPAS Key and RPAS embedded Mobile Module.
- **Figure 8**: shows the work flow for SIAM Identity checking.
- **Figure 9**: shows a diagram illustrating a SIAM application functions.
- **Figure 10**: shows the different functions of a SIAM reporting framework.

### ABBREVIATIONS

A number of abbreviations are used in this specification and are listed below.
AGL: Above Ground Level.
Aircraft: Manned/piloted aircraft or RPAS (unless otherwise stated).
BLOS: Beyond Line Of Sight.
HNFZ: Hard No Fly Zone.
SFNZ: Soft No Fly Zone.
EMM: Embedded Mobile Module.
Key: Pilot Key.
ICAO: The United Nations International Civil Aviation Organisation.
ICCID: Each SIM is internationally identified by its integrated circuit card identifier.
Authentication key (Kᵢ): the Kₙᵢ is a 128-bit value used in authenticating the SIMs on the mobile network. Each SIM holds a unique Kᵢ assigned to it by the operator during the personalization process. The Ki is also stored in a database (termed authentication center or AuC) on the carrier's network.
IMSI: International Mobile Subscriber Identity.
IMEI DB: The GSMA maintains a unique system known as the International Mobile Equipment Identity Database.
NTIA: National Telecommunications and Information Administration.
NOTAM: Notice To Airmen.
Pilot: Aircraft pilot or RPAS pilot (and the RPAS Key owner for Cat 1 and 2 keys). RPAS Pilot: An individual who is appropriately qualified and/or licensed as an RPAS pilot according to applicable laws and regulations.
PIN: Personal identification Number.
PUK: Personal unblocking code.
RTB: Return to Base.
RTP: Return to Pilot.
SIAM: Secure Integrated Airspace Management system.
SIAM.AIN: Aircraft Identity Number.
SIAM.CIM: Central Incident Management.
SIAM.CPIR: Central Pilot Identity Register in SIAM.
SIAM.FMC: Flight Management Centre.
SIM: Subscriber Identification Module.
UAV: Unmanned Aerial Vehicle.
VLOS: Visual Line Of Sight.

### DETAILED DESCRIPTION

This section describes an implementation of the invention from RelmaTech Limited.

### Overview

RelmaTech has developed a Secure Integrated Airspace Management (SIAM) system for Remotely Piloted Aircraft Systems (RPAS). The system addresses the fundamental needs for the safe operation of Remotely Piloted Aircraft Systems (RPAS) in the civil airspace:
- Aircraft and Pilot Digital Identification;
- Airspace Management;
- Incident Management.

The development of the SIAM system has taken into account a number of regulatory issues, such as:
- The pilot is responsible for the operation of the RPAS at all times irrespective of the level of autonomy.
- The pilot must know where the RPAS is at all times.
- The RPAS must know where the pilot is at all times.
- The pilot must be aware of what is going on around the RPAS including the inherent risks and dangers.
- The pilot of must be aware of the legal obligations in relation to his/her operation of the RPAS (privacy, nuisance and No Fly zones).
- Legal intervention must be possible in exceptional circumstances, for example for the enforcement of No Fly Zones.

SIAM offers a viable and robust solution to the major issues confronting policy makers in relation to RPAS typically operating below 152.4 m (500 feet). Through the innovative integration of proven technologies and operational concepts used in civil aviation, global online and mobile communications, and information management together with the rational application of mainstream transport regulatory practices, SIAM provides the functionality and operational capabilities that address two overarching issues:
- How can the forecast proliferation of RPAS operated by private enthusiasts and commercial enterprises be safely managed in the airspace below 152.4 m (500 feet); and more critically,
- How can the accompanying need to be able to establish the identity of an RPAS, its owner and its pilot (noting that the owner of the RPAS may or may not be the pilot of that RPAS) be best satisfied within the context of a secure integrated airspace management system.

SIAM is a global system capable of operating across geopolitical boundaries. The aircraft and pilot registers are global databases, capable of tracking both drones and pilots wherever they operate in the world. It is the global nature of the system that adds real and significant value to the industry as a whole.

SIAM is a base system capable of delivering against a set of well-defined requirements. A number of implementation methods are employed in order to:
- produce variants of the system to deliver the result required;
- provide additional functionality for the system;
- provide system redundancy to increase the reliability and/or coverage of the system;
- serve additional use cases for the system.

Important features and capabilities of SIAM are, but not limited to:
- **Global RPAS Aircraft and Pilot Databases** - secure global registries containing:
   o The unique digital Aircraft identification Number of each RPAS manufactured.
   ∘ Details of each RPAS owner; and
   ∘ Details of RPAS licensed pilots, RPAS Key owners and RPAS Key holders.
- **RPAS Key** - an integral part of SIAM, the RPAS Key (and onboard SIM-type digital device) provides two-way communications between the RPAS and SIAM, enabling Key validation, pilot identification, and RPAS identification, activation and real time flight monitoring.
   ∘ A registered and activated Key must be installed in the RPAS for the RPAS to operate.
   o Several Key categories cater for the full range of potential users and operational scenarios (e.g. CAT1 - Personal; CAT2 - Commercial; CAT3-Institutional, Corporate & Government; CAT4 - Essential Civil Services; CAT5 - National Security; CAT6 - Defence).
   o The Key contains secure information that identifies the Key owner and the RPAS pilot.
   ∘ The Key enables pre-flight 'authorization' by sending onboard RPAS aircraft and pilot information to SIAM for validation against information registered in the SIAM databases.
- **Flight Management Centre** - determines from information received from both the RPAS Key and that entered by the RPAS pilot via a SIAM front-end application whether the flight to be undertaken is Line of Sight (LOS) or Beyond Line of Sight (BLOS), and then oversees the flight according to SIAM Flight Operations Procedures.
   ∘ Provides flight planning and flight plan approval, taking into consideration existing No Fly Zones, obstacles and obstructions, and the registered and active flight plans of other RPAS.
   ∘ Enables one pilot to one RPAS, and one pilot/system controller to many RPAS operations.
   ∘ Provides 'Detect and Avoid' separation assurance and collision warning capabilities through an innovative 'My Zone', real-time airspace display, and warning messages to RPAS pilots.
- **No Fly Zones** - SIAM provides for the establishment, display, supervision and enforcement of both long term (permanent) and short term (temporary) No Fly Zones.
   ∘ Permanent No Fly Zones are created in SIAM by RelmaTech in consultation with authorities.
   ∘ Temporary No Fly Zones can be easily created and removed in SIAM by authorised agencies (e.g. CAT4, CAT5 and CAT6 Key owner/operators) via a secure online portal.
   ∘ Flights within a No Fly Zone are authorized according to Key category and permissions.
   o SIAM's Incident Management Centre issues infringement warnings and notices, and can initiate activation of the RPAS Return-to-Base or Return-to-Pilot function via the RPAS Key.

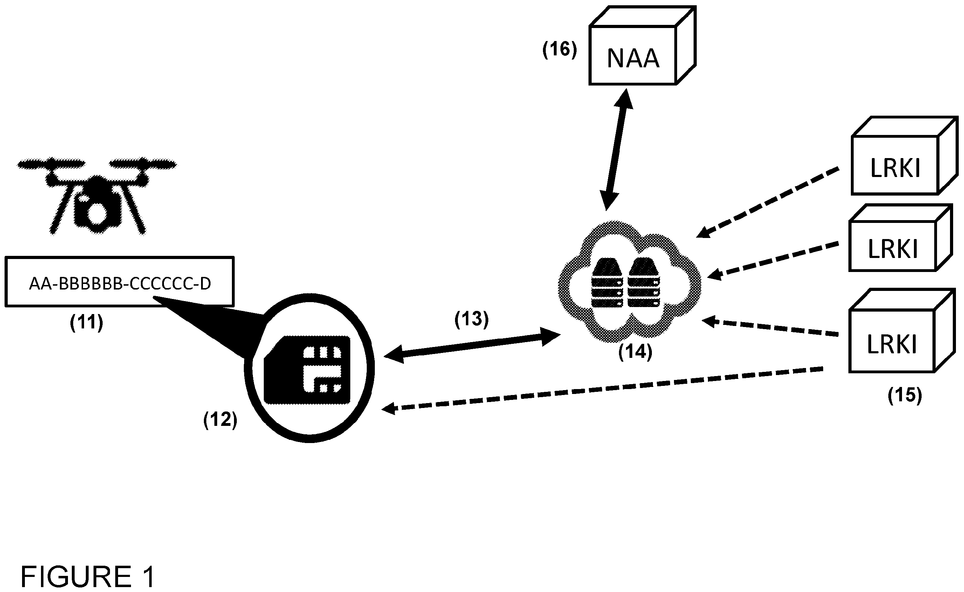

**Figure 1** is a diagram showing the main high-level components of the system. An RPAS may be sold with embedded Mobile communication unit and a Unique embedded digital Aircraft Identification Number (AIN) (11). An AIN is provided by the RPAS manufacturer. Each aircraft identifier may be broadcast back to a central server during flight. A registered, activated RPAS key - the unique pilot identifier and integrated licence to fly **(12),** is inserted into the RPAS to enable flight. The unique pilot identifier must be physically present and valid before the aircraft can be operated. A pilot's licence may be revoked or terminated at any time that would cause the aircraft to return to start if in flight, or to not operate if still on the ground. A secure website may be established where both commercial and private users may register to and obtain a valid Key and Licence. An RPAS Key Category gives the pilot specific flight permissions. The SIM Manufacturer may embed a secure unique ID based on the GSM technology IMSI number. The RPAS verifies presence of valid RPAS Key before flight and communicates with SIAM via Globally Standardized Mobile Communications **(13),** for flight planning, location tracking and NFZ management. The position and track of each aircraft may be transmitted each 30 seconds to a central server or database where it is logged. This information may then be aggregated with all craft in an area and transmitted for airspace management applications, services, and warnings. A Globally Standardized Data Sharing Platform **(14)** hosts SIAM central databases and processors and is linked to LRKI - Licensed RPAS Key Issuer (Resellers and RelmaTech). The sharing platform also communicates with NAA- National Aviation Agency **(16).** In addition, Hard No Fly Zones and Soft No Fly Zones may be uploaded to the aircraft and added to its database at any time. Any airspace breaches by an aircraft are also logged.

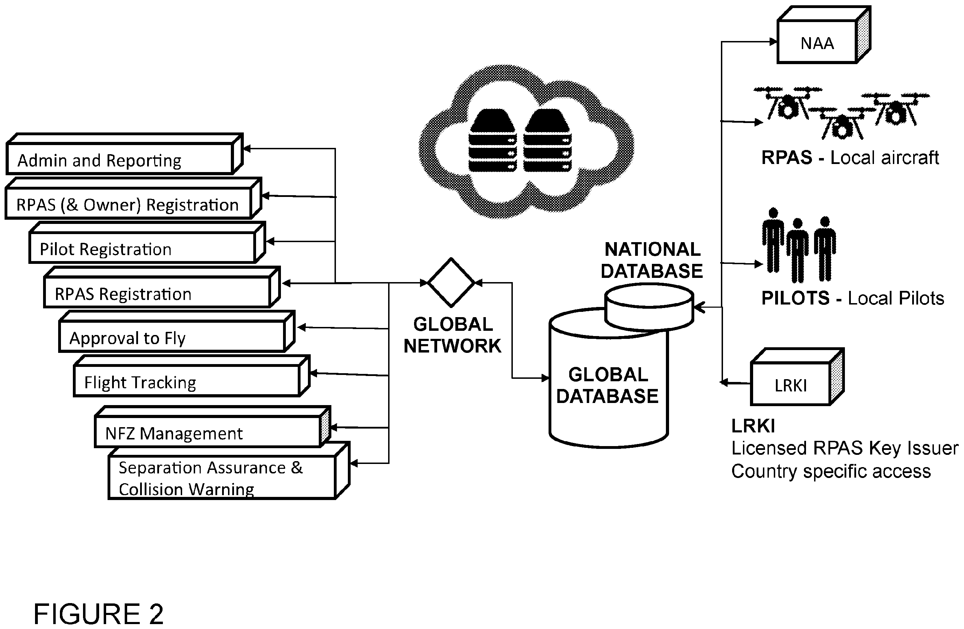

**Figure 2** is a diagram illustrating the modular functionality, registers and databases of the system. Examples of functionality may include: admin and reporting, RPAS registration, pilot registration, regulation and policy, approval to fly, flight tracking, NFZ management, and separation assurance and collision warning.

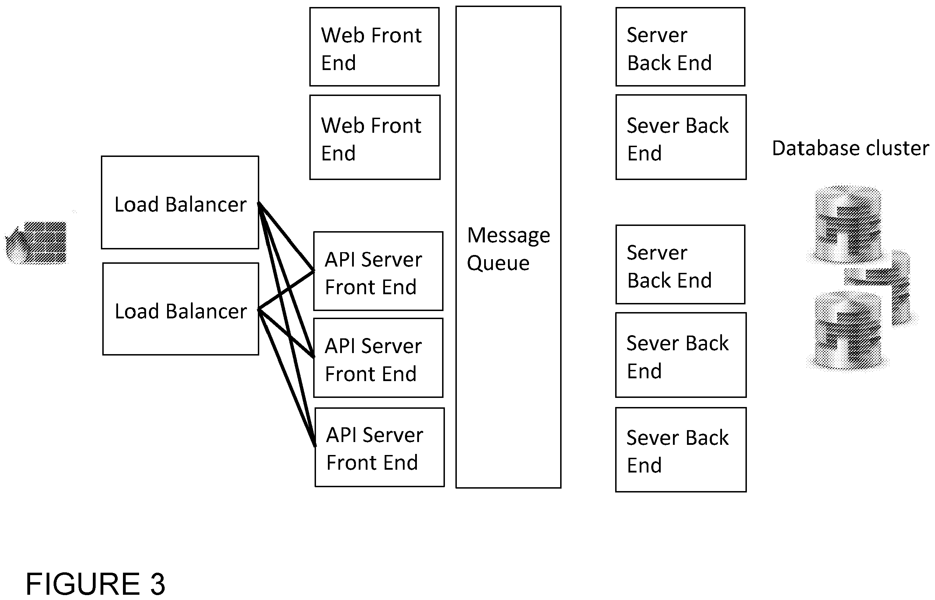

**Figure 3** is a diagram illustrating the server architecture layout. Secure communications to a server are setup in order to for example check registration and licence as well as download any new soft no fly zones.

The remotely piloted aircraft system comprises an authentication module that has an identity uniquely associated with a specific pilot that is programmed to enable, when used with a communications module, authenticated and encrypted data communications with the secure integrated airspace management (SIAM) system that is local to the aircraft, or is at a remote server. An example of a GSM authentication process that may be used is the following:
- when the mobile equipment starts up, it obtains an IMSI from the SIM card, and passes this to the mobile operator requesting access and authentication. The mobile equipment may have to pass a PIN to the SIM card before the SIM card reveals this information;
- the operator network searches its database for the incoming IMSI and its associated Ki;
- the operator network then generates a Random Number (RAND, which is a nonce) and signs it with the Kᵢ associated with the IMSI (and stored on the SIM card), computing another number known as Signed Response 1 (SRES_1).
- the operator network then sends the RAND to the mobile equipment, which passes it to the SIM card. The SIM card signs it with its Kᵢ, producing SRES_2, which it gives to the mobile equipment along with encryption key K_{c}. The mobile equipment passes SRES_2 on to the operator network.
- the operator network then compares its computed SRES_1 with the computed SRES_2 that the mobile equipment returned. If the two numbers match, the SIM is authenticated and the mobile equipment is granted access to the operator's network. K_{c} is used to encrypt all further communications between the mobile equipment and the network.

Features or modules of the sever with web portal may include the following, but not limited to:
- Flight Management Control: FMC provides flight planning, flight tracking and incident generation against pre-configured regulatory and operational parameters. This module also assists PILOTs in safe operation of RPAS by providing warnings when approaching a NFZ or when a flight path deviated from the flight path.
- Central Incident Management: CIM registers any incidents (violations) along with its severity during the course of a flight and sends the event to the concerned registered authorities. The incidents are generated against regulatory (NFZ, AGL, RANGE), or against operational parameters (deviation from a flight plan).
- Central Pilot Identity Register: CPIR acts like pilot registry system, wherein pilot details along with their license type and expiry information are registered. Each RPAS flight is mapped to one pilot registered in this CPIR sub-system. It also provides secure identity to the pilots.
- Central Aircraft Identity Register: CRPR provides interface to aviation regulators to manage regulatory parameters (NFA, AGL, and RANGE). FMC (Flight Management Control) uses these data to generate incidents in real-time for any violations.
- Central Regulatory & Policy Register: CAIR provides interface to manage aircraft and owner registration. Manufacturer registers an aircraft in CAIR system and CASA registers owner for the aircraft.
- Licensed RPAS Key Issuer: This is IMSI of the subscriber that has been provided by our system.
- Web Application: Web Portal Application may be provided for all above features.

We will now look at the following areas in turn:
**Section 1. Statement of Requirements (SIAM for RPAS)**
**Section 2: Statement of Requirements (SIAM for Civil Aviation)**
**Section 3: Service Description**
**Section 4: Technical Description**
**Section 5: Operational Description Covering System Variants**
**Section 6: Technology Description For System Variants**
**Section 1: Statement of Requirements (SIAM for RPAS)**

This section provides a detailed description of a viable and robust solution - a Secure Integrated Airspace Management (SIAM) system for RPAS typically operating below 152.4 m (500 feet).

The following sections present:
- specific policy considerations that are necessary to maintaining the safety of the national air space;
- a detailed operational requirements of the proposed SIAM solution;
- a suite of use cases that describe the various operational concepts covered by the proposed solution;
- functional requirements and design criteria for the SIAM system.

### 1.1 Considerations

Specific policy considerations that will contribute to maintaining the safety of the national air space include:
1. Adoption of an international vocabulary with terminology that best encapsulates the key elements of unmanned airborne systems: if it flies, it is an 'aircraft'; there must always be a pilot responsible for the control of an aircraft (irrespective of the level of autonomy); and an aircraft is a 'system of systems', including those associated with its command and control. The International Civil Aviation Organisation (ICAO) has chosen the descriptor 'Remotely Piloted Aircraft Systems (RPAS)' over other terms in common use (e.g. UAS, UAV, RPAV and 'drone').
2. The primary issue of public risk and safety must be addressed by emphasizing the importance of a robust legal and regulatory framework across the range of RPAS operators, platform/vehicle types, payloads, and communications between operator and platform/payloads. Regulators should be delegated as the central registry and authority on all RPAS types and applications, including small 'toy'-type remote controlled aircraft that could be easily deployed as lethal weapons or surveillance platforms, and hobby and enthusiast aircraft which could be similarly deployed or used for commercial or civil applications. Regulators can then use their databases to provide guidance to local communities and authorities on how to regulate RPAS applications and operations in their jurisdictions in the interest of public safety and privacy.
3. RPAS should not be used in areas where personal privacy can be infringed upon unless companion education and transparency are provided to the public. The responsible use of the technology must be promoted, recognising that existing laws designed to protect the privacy and civil liberties of individuals may need to be reviewed, and if necessary amended to address the use and remote control of technology (including RPAS) by a person or persons to invade another person or persons privacy, or deny a person or persons civil liberties.
4. More emphasis must be placed on the air vehicle as a platform, the mission capabilities of platforms and their 'payloads' (current and potential), and the integrity of related technologies that enable them to operate remotely. What the aircraft is carrying and for what purpose are far more important policy drivers than vehicle mass and flight envelope. Therefore, specific size/speed/weight/duration/ distance metrics for RPAS operations need to be developed.
5. Electromagnetic compatibility (EMC) of the airborne system and its ground control system must be considered in order to ensure flight safety. In particular, operation in High Intensity Radiated Field (HIRF) environments needs to be addressed. EMC aspects emphasize the potential non-cooperative system-level requirements for safe operation, whereas solely focusing on spectrum management presumes a cooperative environment for Command and Control and onboard systems. RPAS downlinks in bands planned for terrestrial applications (e.g. cellular and Wi-Fi bands), could have a disproportionate impact on other users of such spectrum; therefore, RPAS downlinks should be limited to bands specifically selected for them. Thus it is vital that government communication and aviation agencies act in parallel to identify which bands can and which bands cannot be used by RPAS, rather than permit RPAS to use cellular and Wi-Fi bands without adequate consideration of terrestrial users. In particular, these agencies must prohibit any jamming of RPAS communications until legislation exists to protect RPAS communications supporting military and first responder operations (noting that in the United States, Federal users use bands controlled by NTIA and in most cases they have sole access or prime access to such bands).
6. Industry advisers do not support the use of RPAS in populated or other high-asset areas unless hardware and software systems control is guaranteed. Policy makers must require that RPAS control security is assured at all times, and RPAS control safety is demonstrated before airspace integration is considered. This will require cooperation and coordination across agencies and between different levels of government. There is significant potential for future developments in these technologies and their adverse capabilities, such as the ability for hostile agents to take control of and semi-autonomously direct airborne systems against the better interests of mankind. RPAS rely on significantly more command and control data being relayed between the ground operator and the aircraft than in manned aircraft operations, hence RPAS are highly susceptible to cyber security infringements. Therefore, safe-guarding the command and control integrity of large commercial RPAS operations is and destruction on a large scale similar to 911 if that integrity is compromised by hostile agents.
7. RPAS must be fully incorporated into National Airspace Management so that they are visible to Air Traffic Controllers and other operating aircraft. To mitigate the potential for mid-air collisions between RPAS, and RPAS and manned aircraft, policy directives must require that RPAS operations meet safe aircraft separation standards. Policy makers must ensure that regulations for collision avoidance in civil aircraft operations are reviewed and extended to RPAS operations. This may cause aviation regulators to implement specific collision avoidance requirements for RPAS operations. Federal aviation rules may need to be established now to address the capabilities of proposed and future autonomous 'sense-and avoid'/ manoeuvring systems. Importantly therefore, governments must also adopt policies that assure RPAS flight safety in a shared environment is demonstrated before full airspace integration is considered.
8. Policy directives must continually remind their intended audience that a competent pilot, even one physically remote from the aircraft, remains essential for the safe operation of the aircraft and its mission. It is recommended that for anyone to operate a RPAS, they must be licensed to an equivalent level of competency as other aviation pilots conducting similar private or commercial flight operations. In the United States, the Academy of Model Aeronautics (AMA) has a long and successful history in advocating for the flying privileges of the aero-modelling community; it is one of the top reasons why aero-modellers join the AMA. The AMA's pilot training and accreditation scheme provides a good model that can be adapted for regulating the training and certification of private RPAS operators, such as hobbyists and enthusiasts, and small RPAS commercial operators. A government background check must be conducted on the applicant RPAS pilot, and the person's record kept. Those operating without a license or in contravention of their license will be violating the air space law and be liable for prosecution under applicable local, state or federal laws.
9. Policy directives must address the issue of operator/pilot integrity, including the potential for incompetent, negligent, reckless, mischievous, malicious and criminal use of RPAS, whether in private or commercial applications. This issue requires a two-part solution: firstly, that which enables an air vehicle to be identified and traced back to its owner/operator/pilot so that accountability for the vehicle's operation (whether government, for profit, non-profit, public safety, etc.) can be enforced within a robust legal and regulatory framework; and secondly, that which addresses operator/pilot competence through effective training and certification.
10. Policy directives must be reasonable so that model aircraft enthusiasts can still enjoy their hobby while air space safety is maintained and without risking the national security and regulatory violation.

These statements are intended to place focus on "what" needs to be done to best introduce RPAS standards and regulations (i.e. "what" outcomes need to be achieved for the responsible use of this technology and its safe integration into the National Airspace).

### 1.2 Business Requirements

### RPAS Key

Aircraft activation:
- The RPAS Key is an integral part of the SIAM system. The Key is a physical device that acts as an aircraft GO / NO GO facility. A registered and activated Key must be inserted into the RPAS for the aircraft and its systems to operate; like an ignition key enables a motor vehicle and a SIM card enables a mobile phone, the Key enables the RPAS to be activated.
- Keys are to be universal to RPAS makes and models; they are to be fully transferable between RPAS (i.e. one size fits and works all).

Aircraft activation:
- The Key must be able to read the RPAS hard-coded Aircraft Identification Number (AIN), which serves a similar purpose to an automobile Vehicle Identification Number (VIN). Note: The AIN identifies the ownership of the RPAS.

Owner Identification:
- The RPAS Key must contain secure information that identifies its owner (i.e. name, address, employer, contact mobile phone number, RPAS licence type, RPAS pilot licence number), like the International Mobile Subscriber Identity (IMSI) on a SIM card identifies the account owner of a mobile phone.

Key Activation:
- New Key owners and their Key category 'permissions' are registered at the time of purchase by uploading their information into the Central Pilot Identity Register within SIAM (i.e. SIAM.CPIR) via a request submitted through an online portal.
- New Keys owners are advised by SMS to their nominated Key contact number when their registration has been completed and their Key has been activated for use.

Key Categories:
- RPAS Keys must be available in the following categories in order to cater for the potential full range of users and operational scenarios, each of which may require the RPAS pilot to have certain flight permissions in order for the intended and lawful RPAS mission to be safely conducted in the managed airspace.
- Category 1 - Personal: for RPAS pilots (including hobbyist, enthusiast, club member, independent farmer, large property holder, etc.) who operate single RPAS for their personal use and enjoyment, but not for hire or reward. A Cat 1 key will permit both VLOS and BLOS operations depending on the status of the owner pilot's registration in SIAM.CPIR.
- Category 2 - Commercial: for RPAS pilots who operate a single RPAS for hire or reward or on a commercial basis on behalf of an his/her employer (such as freelance media, professional photography, real estate, engineering consultancy, surveying, inspections, etc.) A Cat 2 key will permit both VLOS and BLOS operations depending on the status of the owner pilot's registration in SIAM.CPIR.
- Category 3A - Institutional, Corporate & Government: for academic and science/research institutions, corporations (including corporate media), utilities and government agencies (e.g. EPA, DNR, DOT) who conduct piloted RPAS operations in association with non-essential services. Organisations are responsible for ensuring that their RPAS Cat 3A Keys are only issued to and used by employees/staff who are RPAS pilots. A Cat 3A key will permit both VLOS and BLOS operations depending on the status of the pilot's registration in SIAM.CPIR.
- Category 3B - Institutional, Corporate & Government: for academic and science/research institutions, corporations (including corporate media), utilities and government agencies (e.g. EPA, DNR, DOT) conducting programmed semiautonomous system-operated RPAS operations in association with non-essential services. Such operations are considered to be BLOS and typically involve multiple RPAS operating in an integrated stationary or moving array (e.g. environmental monitoring, media coverage of a major sporting event) or 'production line' arrangement (e.g. logistics solutions, such as discrete goods dispatch and delivery). For Cat 3B keys, the owning organisation is registered in SIAM.CPIR as the 'pilot'. Therefore, organisations are responsible for ensuring that their Cat 3B keys are not issued to or used by employees/staff, even if those employees/staff are licensed RPAS pilots.
- Category 4A - Essential Civil Services: for local, state and federal agencies and organisations engaged in law enforcement, emergency services/first responder, health and medical response, situation monitoring, border protection, etc. who conduct piloted RPAS operations in association with the provision of essential civil services. Organisations are responsible for ensuring that their RPAS Cat 4A Keys are only issued to and used by employees/staff who are licensed RPAS pilots. A Cat 4A key will permit both VLOS and BLOS operations depending on the status of the pilot's registration in
- Category 4B - Essential Civil Services: for local, state and federal agencies and organisations engaged in law enforcement, emergency services/first responder, health and medical response, security, situation monitoring, border protection, etc. and who conduct programmed semi-autonomous system operated RPAS operations in association with the provision of essential civil services. Such operations are considered to be BLOS and typically involve multiple RPAS operating in an integrated stationary or moving array (e.g. situation monitoring), or a repetitive 'production line' arrangement (e.g. routine patrol). For Cat 4B keys, the owning organisation is registered in SIAM.CPIR as the 'pilot'. Therefore, organisations are responsible for ensuring that their Cat 4B keys are not issued to or used by employees/staff, even if those employees/staff are licensed RPAS pilots.
- Category 5A - National Security: for federal agencies who conduct piloted RPAS operations in the interest of national security (e.g. ASIO, CIA, FBI, NSA). For Cat 5A keys, the owning organisation is registered in SIAM.CPIR as the 'pilot', and organisations are responsible for ensuring that their Cat 5A keys are only issued to and used by employees/staff who are licensed RPAS pilots. A Cat 5A key will permit both VLOS and BLOS operations.
- Category 5B - National Security: for federal agencies who conduct programmed semi-autonomous system-operated RPAS operations in the interest of national security (e.g. ASIO, CIA, FBI, NSA). Such operations are considered to be BLOS and may involve one or multiple RPAS operating independently or in an integrated stationary or moving array. For Cat 5B keys, the owning organisation is registered in SIAM.CPIR as the 'pilot'. Therefore, organisations are responsible for ensuring that their Cat 5B keys are not issued to or used by employees/staff, even if those employees/staff are licensed RPAS pilots.
- Category 6A - Defence: for Defence Forces who conduct piloted RPAS operations. For Cat 6A keys, the owning organisation is registered in SIAM.CPIR as the 'pilot', and organisations are responsible for ensuring that their Cat 6A keys are only issued to and used by employees/staff who are licensed RPAS pilots. A Cat 6A key will permit both VLOS and BLOS operations.
- Category 6B - Defence: for Defence Forces who conduct programmed semi-autonomous system-operated RPAS operations. Such operations are considered to be BLOS and may involve one or multiple RPAS operating independently or in an integrated stationary or moving array. For Cat 6B keys, the owning organisation is registered in SIAM.CPIR as the 'pilot'. Therefore, organisations are responsible for ensuring that their Cat 5B keys are not issued to or used by employees/staff, even if those employees/staff are licensed RPAS pilots.

Key Ownership:
- Anyone may be able to acquire and own an aircraft, but only appropriately qualified and/or licensed individuals are legally permitted to pilot one. Therefore, RPAS Key ownership restrictions place emphasis on aircraft operation and pilot skill, rather aircraft ownership. For Cat 3A, 4A, 5A and 6A keys, it is expected that organisations would train or engage qualified RPAS pilots to conduct flight operations on their behalf. For Cat 3B, 4B, 5B and 6B keys, it is expected that organisations will train or engage qualified system operators to program and monitor system-operated RPAS flight operations on their behalf.
- Key owner information is managed within SIAM.CPIR.
- The Key owner remains responsible for ensuring the legal and safe use of the Key to conduct an RPAS flight. Except in exceptional circumstances, such a pilot training, it should be illegal for a Key owner to permit their Key to be used by another person to pilot an RPAS flight.
- Cat 1 Key - may only be acquired and owned by an RPAS pilot. An RPAS pilot may own a Cat 1 Key and a Cat 2 Key at the same time (i.e. a Cat 1 Key for personal and recreational use, and a Cat 2 Key for use associated with their employment), but may not own more than one Cat 1 Key and one Cat 2 Key at any time.
- Cat 2 Key - as for the Cat 1 Key.
- Cat 3A Key - maybe only be acquired and owned by a qualifying organisation, which is responsible for allocating the Key to an authorised RPAS pilot.
- Cat 3B Key - maybe only be acquired and owned by a qualifying organisation.
- Cat 4A Key - as for the Cat 3A Key.
- Cat 4B Key - as for the Cat 3B Key.
- Cat 5A Key - as for the Cat 3A Key.
- Cat 5B Key - as for the Cat 3B Key.
- Cat 6A Key - as for the Cat 3A Key.
- Cat 6B Key - as for the Cat 3B Key.

Data transmission:
- When the RPAS is activated (i.e. when the Key is in place in the aircraft and the aircraft systems are turned ON), the Key facilitates transmission of the following information to SIAM:
   - Key type and permissions.
   - Pilot identification.
   - The aircraft AIN.
   - Aircraft position, heading, speed and altitude (AGL).
- The transmission interval to the SIAM may be set as a variable with 5 second increments.
- The transmission interval to the SIAM will be set to a default of 15 seconds (i.e. every 201.168 m at 48.28 km/h (660 feet) at 30 mph).
- The Key must facilitate reception and activation of the Return To Base (RTB) command transmitted from SIAM to the aircraft (see section on RTB functionality).
- The Key must facilitate reception and activation of the Return To Pilot (RTP) command transmitted from SIAM to the aircraft (see section on RTP functionality).

### SIAM Features

Hard No Fly Zones (HNFZ):
- HNFZ define permanent or long term restricted airspace where RPAS Cat 1, Cat 2 and Cat 3A/B Key operations are forbidden by law and/or regulation by local, state or federal governments (e.g. airports, government buildings, official residences, high density areas, places of national security, schools, etc.).
- HNFZ are defined on digital geographic maps (e.g. Google Maps) which form part of the SIAM database and provide a practical alternative to permanent Geo-Fencing.
- All airspace above 152.4 m (500 feet)
   AGL - or whatever maximum operational ceiling is regulated -will be regarded as a HNFZ and subject to all HNFZ rules.
- SIAM will have the ability to determine when an RPAS has infringed a HNFZ.

Soft No Fly Zones (SNFZ):
- SNFZ define temporary or short term restricted airspace where RPAS Cat 1, Cat 2 and Cat 3A/B Key operations are forbidden by law and/or regulation by local, state or federal governments (e.g. accident scenes, crime scenes, disaster areas, civic and sporting events, etc.)
- SNFZ are defined on digital geographic maps (e.g. Google Maps) which for part of the SIAM database and provide a practical alternative to temporary Geo-Fencing.
- SIAM will have the ability to determine when an RPAS has infringed a SNFZ.

Return to Base:
- Where an RPAS has infringed a HNFZ or SNFZ, SIAM must be able to override the pilot's control and activate the aircraft's Return To Base (RTB) function (i.e. Lawful Intercept).

Return to Pilot:
- SIAM must be able to determine the location of the RPAS pilot, which may not necessarily be the point of launch/take-off (as the pilot may also be mobile). Note: if not already a feature, this requirement should force RPAS manufacturers to build C2 functionality that continually updates the location of the pilot with respect to the aircraft.
- Where an RPAS has infringed a HNFZ or SNFZ, SIAM must be able to override the pilot's control and activate the aircraft's Return To Pilot (RTP) function (i.e. Lawful Intercept).

Incident Management:
- SIAM will have a central Incident Management System (SIAM.CIM).
- SIAM.CIM will enable all stored data to be retrieved via a suite of reports which can be displayed on screen and/or printed by an authorised person.
- SIAM.CIM must be able to discriminate between Key Types (1, 2 and 3) and manage HNFZ and SNFZ enforcement according to their permissions (e.g. Type 3 pilots may be exempt from some or all Hard and Soft No Fly Zones).
- SIAM.CIM will automatically record all details relating to HNFZ and SNFZ enforcement, including copies of issued infringement notices.
- SIAM.CIM will record all details relating to the creation and removal of all SNFZ.
- When a SNFZ has been created, SIAM.CIM will send an SMS message to all pilots operating RPAS within the declared SNFZ, advising them to immediately remove their aircraft from the area or risk infringement action.
- SIAM.CIM will determine if and when an advisory message sent to a pilot has been received.
- An RPAS failing to leave a SNFZ within 30 seconds of an advisory message being acknowledged by SIAM.CIM as received will be treated as an infringement.
- SIAM.CIM will send an SMS message to a pilot operating an RPAS within 804.67 m (0.5 mile) of a HNFZ or SNFZ, warning the pilot that he/she is at risk of infringing a HNFZ or SNFZ.
- Where an RPAS has infringed a HNFZ or SNFZ, SIAM.CIM will have the ability to notify the pilot of the infringement.
- Where an RPAS has infringed a HNFZ or SNFZ, SIAM.CIM will have the ability to notify the appropriate authorities of the infringement.
- SIAM.CIM will have the ability to issue a NOTAM if an RPAS goes near and/or breaches a HNFZ or SNFZ.
- Where an RPAS has infringed a HNFZ or SNFZ, SIAM.CIM will have the ability to issue an Infringement Notice to the pilot. Note: Similar to traffic light and speed camera infringements, where fines (not warnings) are issued for infringements and the default assumption is that the offending driver is the registered owner of the vehicle.
- Where an Infringement Notice has been issued, SIAM.CIM will have the ability to provide a copy of the infringement notice to the appropriate authorities.

General:
- SIAM must be able to detect and track an RPAS up to 304.8 m (1000 feet) AGL. This enables Cat 4, Cat 5 and Cat 6 Key pilot operations to be tracked above the 152.4 m (500 feet) AGL HNFZ.

### 1.3 Concept of Operations (Use Cases)

### 1.3.1 Acquiring and activating an RPAS Cat 1 or Cat 2 Key

Having successfully undertaken RPAS pilot training and obtained an RPAS pilot's licence for operation under 152.4 m (500 feet) AGL, an aspiring RPAS pilot is then qualified to purchase his/her own RPAS Key (Cat 1 or Cat 2) from a licensed RPAS Key retailer.

The retailer accesses the SIAM web portal and completes and submits an online registration application form on behalf of and with information provided by the acquiring pilot. The registration form also includes the RPAS Key information. The SIAM Central Pilot Identity Register (SIAM.CPIR) automatically receives and processes the registration application form, using several secure online databases to validate the details provided (i.e. carry out an ID and contact phone check). The online registration process should only take a few minutes.

If registration validation is successful, the SIAM.CPIR adds the Key registration to its database, sets the status of the Key to ACTIVE, and notifies the retailer accordingly by displaying a 'success' advisory script. SIAM.CPIR also advises the acquiring pilot by sending a text message to the mobile phone nominated on the registration form as the pilot's 'operational contact number'. This is the number to which SIAM will communicate with the pilot, particularly any advisory messages requiring the pilot's attention during flight operations enabled by the pilot's RPAS Key. The pilot then finalises the transaction with the retailer and takes possession of the activated Key.

If registration validation fails, the SIAM.CPIR will notify the retailer accordingly by displaying a 'failed' advisory script containing information outlining the reason(s) for failure. SIAM will not add the registration to the SIAM.CPIR database, nor will it send the acquiring pilot a text message to the nominated mobile phone. The retailer will be able to change the information on the online registration form and resubmit it.

### 1.3.2 A typical RPAS Cat 1 or Cat 2 flight with no infringements:

To conduct an RPAS flight operation, the pilot must first install his/her RPAS Key into the RPAS Key receptacle in the aircraft. This allows the aircraft systems to be activated (i.e. the aircraft is completely disabled unless a valid RPAS Key is correctly installed in the aircraft).

Assuming that the take-off location is not within a designated HNFZ or SNFZ, the pilot can then launch the RPAS and carry out the intended mission. The pilot's Key will cause a set suite of information including aircraft and pilot identification, and aircraft position, heading, speed and altitude (AGL) to be automatically transmitted to SIAM every 30 seconds while the aircraft systems are activated, whether the aircraft is on the ground or in flight. On completion of operations, the pilot shuts down the aircraft systems and removes his/her Key from the aircraft, disabling the aircraft from further operation until a valid Key is reinstalled in the aircraft.

### Section 2: Statement of Requirements (SIAM for Civil Aviation)

This section focuses specifically on civil aviation operations using SIAM. The fundamental needs of SIAM may also apply to all civil aviation operations - whether the pilot is physically on-board the aircraft or remote from it. Therefore, by applying the same innovative approach, the primary elements of the SIAM for RPAS solution can also be integrated to provide a safe and secure airspace management solution that meets the same needs for civil aircraft operating in the national airspace, and as such SIAM has been developed with an eye to civil aviation use.

### 2.1 Business Requirements

### Pilot Key

Aircraft Activation:
- The Pilot Key is an integral part of the SIAM system. The Key is a physical device that acts as an aircraft GO / NO GO facility. A registered and activated Key must be inserted into the Embedded Mobile Module (EMM) for the aircraft and its systems to operate; like an ignition key enables a motor vehicle and a SIM card enables a mobile phone, the Key enables the aircraft to be activated.
- Keys are to be universal to aircraft makes and models; they are to be fully transferable between aircraft (i.e. one size fits and works all).
- For aircraft not fitted with the EMM, the pilot must activate the secure SIAM app on his smartphone, or activate his purpose-built device, entering the Aircraft Identity Number, and his pilot licence number.

Aircraft identification:
- The Key must be able to read the SIAM hard-coded Aircraft Identification Number (AIN), which serves a similar purpose to an automobile Vehicle Identification Number (VIN). Note: The AIN identifies the ownership of the aircraft.
- In the cases where the pilot is using the SIAM app or the purpose-built device, the pilot must enter the aircraft's AIN into the system before flight, The smartphone or device will then securely broadcast the aircraft's AIN back to the SIAM Core System.

### Owner Identification:

- The Pilot Key must contain secure information that identifies its owner (i.e. name, address, employer, contact mobile phone number, pilot licence type, pilot licence number), like the International Mobile Subscriber Identity (IMSI) on a SIM card identifies the account owner of a mobile phone.

### Key Activation

- New Key owners and their Key category 'permissions' are registered at the time of purchase by uploading their information into the Central Pilot Identity Register within SIAM (i.e. SIAM.CPIR) via a request submitted through an online portal.
- New Key owners are advised by SMS to their nominated Key contact number when their registration has been completed and their Key has been activated for use.

### Key Categories:

- Pilot Keys must reflect the licence category held by the pilot, the issuing authority, the validity and any endorsements.

### Key Ownership:

- Anyone may be able to acquire and own an aircraft, but only appropriately qualified and/or licensed individuals are legally permitted to pilot one. Therefore, Pilot Key ownership is restricted to those with a valid pilot's licence.
- Key owner information is managed within SIAM.CPIR. I
- The Key owner remains responsible for ensuring the legal and safe use of the Key to conduct an aircraft flight. Except in exceptional circumstances, such as pilot training, it should be illegal for a Key owner to permit their Key to be used by another person to pilot a flight.

### Data transmission

- When the aircraft is activated (i.e. when the Key is in place in the aircraft and the aircraft systems are turned ON), the Key facilitates transmission of the following information to SIAM:
   o Key type and permissions.
   ∘ Pilot identification.
   ∘ The aircraft AIN.
   ∘ Aircraft position, heading, speed and altitude (AGL).
- The transmission interval to the SIAM may be set as a variable with 5 second increments.
- The transmission interval to the SIAM will be set to a default of 15 seconds (i.e. every 201.168 m at 48.28 km/h (660 feet at 30 mph)).
- The Key will enable reception of flight track data on a moving map, which will include data of other aircraft flying in the displayed airspace.

### Restricted Airspace

### Permanent restrictions:

- Based on data from local civil aviation and safety authorities, SIAM will display areas of permanently restricted airspace.
- Restricted airspace will be displayed on digital geographic maps (e.g. Google Maps) which form part of the SIAM database.
- The SIAM.FMC will have the ability to determine when an aircraft has infringed restricted airspace.

### Temporary restrictions:

- Based on data from local civil aviation and safety authorities, SIAM will display areas of temporarily restricted airspace.
- Restricted airspace will be displayed on digital geographic maps (e.g. Google Maps) which form part of the SIAM database.
- The SIAM.FMC will have the ability to determine when an aircraft has infringed restricted airspace.

### SIAM features

### Incident Management:

- SIAM will have a central Incident Management System (SIAM.CIM).
- SIAM.CIM will enable all stored data to be retrieved via a suite of reports which can be displayed on screen and/or printed by an authorised person.
- SIAM.CIM must be able to discriminate between Pilot Key types for restricted airspace enforcement according to the requirements of local authorities.
- SIAM.CIM will automatically record all details relating to restricted airspace enforcement, including copies of issued infringement notices.
- SIAM.CIM will record all details relating to the creation and removal of all restricted airspace.
- Where an aircraft is approaching restricted airspace, SIAM will notify the pilot via the SIAM system in the aircraft, via the SIAM app on a smartphone, via the purpose built SIAM device, or via SMS as appropriate based on the pilot's log in to the system.
- In the event of a breach of restricted airspace, SIAM will notify the pilot of his breach, and the relevant authorities as required depending on the type of restriction.
- SIAM has the capability of issuing an infringement notice in the event of breach of restricted airspace depending on the regulations in force. Where an Infringement Notice has been issued, SIAM.CIM will have the ability to provide a copy of the infringement notice to the appropriate authorities.

### 2.2 Concept of Operations (Use Cases)

### 2.2.1 Scope of Civil Aviation operation

SIAM has a wide range of capabilities that can be ideally used for civil aviation operations.

When referring to civil aviation generally, we include the following areas of manned fight:
- Scheduled Air Transport: commercial passenger airlines, cargo flights
- General Aviation:
   o Private aircraft
   o Commercial Aviation: business jets

SIAM's four key elements (Aircraft and Pilot Identification, Airspace Management, Incident Management and Reporting) are all relevant to civil aviation operations. While well-established air traffic control facilities and procedures govern manned aviation, SIAM's key elements can play a significant role in providing a safer and more secure managed airspace.

Of particular interest to national civil aviation authorities is the significant air safety benefits to be gained from implementation of the Digital Identification and Airspace Management elements of SIAM for general aviation applications. The Incident Management and Reporting are SIAM Core System elements and also can be implemented for civil aviation use; Incident Management can be used to provide data on restricted areas or corridors where civil aircraft are not permitted, and can be used to support separation assurance and collision warning functionality. Reporting can be used to provide a live stream to air traffic control, system statistics and data covering aircraft tracks as required.

### 2.2.2 Digital Identity

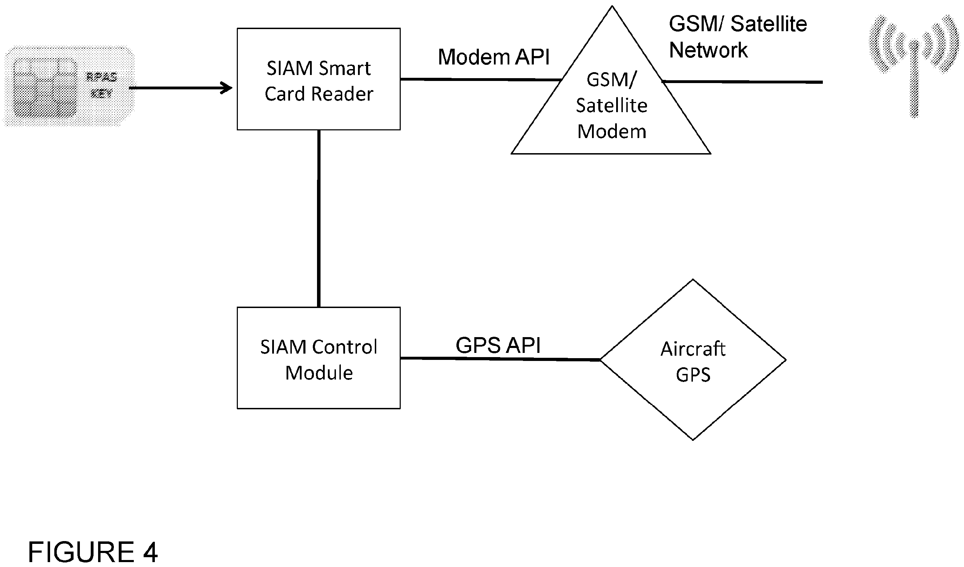

The principle of using the SIAM key with the Embedded Mobile Module (EMM) has direct application for civil aviation use. There are a number of variants for the implementation of the solution, but the fundamental principle of the solution holds. **Figure 4** shows a diagram illustrating the different SIAM aircraft modules. The elements of the SIAM EMM are the SIAM smart card reader, the SIAM control module and the GSM/Satellite modem. The aircraft on-board GPS unit is also shown.

There are three clear implementation modes that can be adopted for civil aviation operation:
- **RPAS key and EMM.** Aircraft manufacturers can incorporate the Embedded Mobile Module into the aircraft system, with the SIAM Card Reader **(****Figure 4****)** being installed in a location that is accessible to the pilot. A valid Pilot Key must be inserted into the SIAM Smart Card Reader in order for flight to take place. In this way the digital identity of the aircraft and of the pilot is established. It is envisaged that the SIAM Control Module **(****Figure 4****)** is located close to the aircraft Flight Data Recorder for security reasons. This method of determining digital identification is suitable for all aircraft. A variant of this approach is for aircraft manufacturers to provide a USB socket in the cockpit into which is inserted a USB SIM card reader containing the Pilot Key.
- **Secure mobile pilot application.** A secure mobile app loaded onto a smartphone enables the pilot to enter his pilot's licence details and the identity of the aircraft (the aircraft's civil aviation registration number). The pilot activates the app as part of pre-flight activities, and for the duration of the flight the smartphone communicates the digital identification of the aircraft and pilot, and the aircrafts position. The functionality of the Smart Card reader, the SIAM Control Module, and the GSM Module are implemented in code utilising some of the smartphone functionality. This approach is suitable for private aircraft and would practically be restricted to non-pressurised aircraft.
- **Dedicated handheld module.** A handheld GPS device that, in addition to GPS functionality, contains the SIAM Embedded Mobile Module, which is used to broadcast the digital identity of the aircraft and the pilot and the location of the pilot (which is the position of the aircraft flight). Communications can be via cellular network or satellite.

### 2.2.3 Airspace Management

A SIAM Control Module **(****Figure 4****)** obtains aircraft location details from the aircraft's onboard GPS. It is envisaged that the SIAM Control Module would be positioned close to the 'Black Box' flight data recorder for security and anti-tamper reasons, and therefore is a separate element from the SIAM Smart Card Reader. The Control Module accesses the GSM or satellite modem (depending on aircraft type) to broadcast its position back to the SIAM Core System. Data traffic is designed to be "bursty" in nature, and requires very low bandwidth for effective communications.

The choice of GSM or satellite modem is made based on the type and operation of the aircraft. Unpressurised aircraft fly at altitudes typically below 3048m (10.000 feet) and so can be assumed to be able to make GSM connections. These aircraft could be fitted with either GSM modem or satellite modem options. Pressurised aircraft typically fly at high altitudes and so require satellite modems to be fitted to ensure effective communications at all times. In some case it could be envisaged that a combination GSM/satellite modem could be fitted to pressurised aircraft, utilising whichever transmission path provides a quality, cost-effective link for the altitude at which they are operating.

SIAM Flight Management Centre (SIAM.FMC) takes the secure location updates and uses them to produce a track of the aircraft's flight, which can be tagged with the aircraft digital identity and pilot's digital identity information. The pilot will have access to this moving map display through the SIAM system. The display will also plot other aircraft in the region that are active in the SIAM system. This can include both manned and unmanned aircraft being monitored by the SIAM system.

The SIAM.FMC can also be used to set up and manage permanent and temporary restricted airspace areas where civil aircraft are not permitted to fly, such as military restricted areas or operational time curfews.

### 2.2.4 Incident Management

The SIAM Core System handles incident management as one of its primary features. In the case of civil aviation, the SIAM Central Incident Management (SIAM.CIM) system provides the facility to notify aircraft if they are approaching restricted airspace. In the case of a breach, pilots and authorities are notified of the infringement to enable them to take further action as required.

On a country by country basis, SIAM may establish restricted zones based on advice from local civil aviation safety authorities. This may include cities, flight corridors for scheduled passenger aircraft, military zones, high security areas, high density living areas, etc.

The SIAM.CIM system may also have the capability of separation assurance and collision warning which can be used to alert aircraft if regulated minimum separation distances are at risk of being breached.

### 2.2.5 Reporting

System performance metrics may be reported to 3^{rd} party application data.

SIAM.CRF is the Central Reporting Framework which can be used to, for example:
- Provide a real-time feed of aircraft movement to air traffic control sites
- Provide statistics on system performance and events
- Provide data on aircraft tracks
- Provide the facility for 3rd parties to offer services to the civil aviation community through the SIAM system.

Through live feeds to Air Traffic Control centres, civil aviation authorities will also be able to monitor the aircraft's track against flight plans checked and approved by SIAM. Infringements would be advised and can be acted upon by authorities as required.

RPAS flights against current regulations may be tracked, no fly zones may also be established and monitor.

A live feed is also established from the system to air traffic control. Through an app the air traffic controllers may be able to, for example:
- verify the identity of the SIAM data provided by pilot.
- take advice from local aviation authorities to plot restricted zones.
- receive notice on civil aviation safety authority from the country.
- separate warnings with bubbles around the aircraft, such as military zones.
- establish flight corridors for scheduled flights, such as restricted corridors for CAT 1 operations).

Pilots may also have access to a display comprising a moving map.

### Section 3: Service Description

RPAS have enormous potential to benefit society. However, instances where their use has been a hindrance, and even endangered life, are increasing and questions remain about how safe this emerging technology is.

This section provides an outline of how the SIAM system may be used for RPAS and how it may benefit society.

Through the innovative integration of proven technologies and concepts used in civil aviation, global online and mobile communications and information management, SIAM works in combination with existing transportation systems to ensure that RPAS operations are safe for the potential range of users and scenarios. SIAM uses state-of-the-art technologies to:
- Perform on-board digital identification, enabling RPAS and their owners, pilots and operators to be identified and their permissions verified - and, where necessary, restricted.
- Determine whether the flight to be undertaken is restricted to Line of Sight (LOS) or permitted for Beyond Line of Sight (BLOS), and then supervise the flight accordingly.
- Interface with control systems designed to simultaneously operate multiple RPAS.
- Establish and enforce No Fly Zones.

These and other capabilities, including separation assurance and collision warning, ensure that RPAS can be safely operated within a secure integrated managed airspace.

The following describes how the issues regarding aircraft, owner and pilot identity are solved in practice and how digital identity is used in combination with real time aircraft tracking and the management of No Fly Zones.

### 3.1 Identity

SIAM's Aircraft and Pilot Databases are secure global registries containing:
- The unique digital Aircraft identification Number of each RPAS manufactured.
- Details of each RPAS owner; and
- Details of RPAS licensed pilots, RPAS Key owners and RPAS Key holders.

### 3.1.1 Aircraft Identification

SIAM requires each aircraft be fitted with an Embedded Mobile Module (EMM) during manufacture.
- The EMM has a unique and secure digital identity, which SIAM uses as the Aircraft Identification Number (AIN).
- The AIN and other aircraft information (make/model/serial number) are uploaded by the manufacturer into SIAM's Central Aircraft Identity Register (SIAM.CAIR) via a manufacturer's interface.
- For custom-built aircraft, this information is captured by the regulatory agency when the aircraft is granted airworthiness certification.

### 3.1.2 Aircraft Owner Identification

SIAM requires that, at the time of sale, the aircraft owner be registered against the aircraft serial number.
- Information is captured and uploaded by the seller into SIAM.CAIR via a reseller interface.
- For owner-built aircraft, information is captured by the regulatory agency when the aircraft is granted airworthiness certification.

### 3.1.3 Pilot Identification

The RPAS Key is an on-board SIM-type digital device that provides communications between the RPAS and SIAM, enabling Key validation, pilot identification, aircraft and owner identification, RPAS activation and real time flight monitoring.

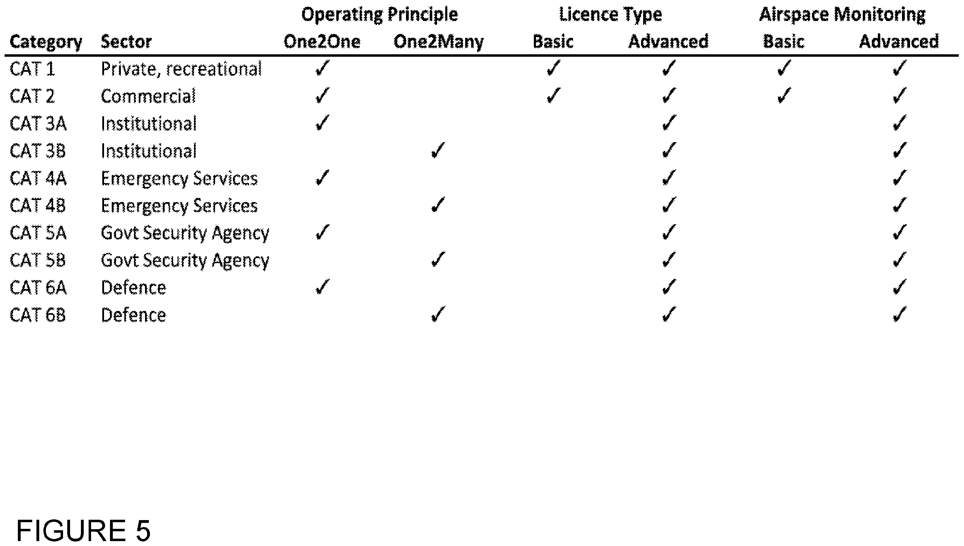

Several examples of Key categories (see also Section 1.2) cater for the ranges of potential users are listed in **Figure 5****.** Key categories and their attributes are summarized.

Examples or operational scenarios may also be the following:
- Operating principle:
   ∘ One2One: Direct pilot control on a one to one basis.
   ∘ One2Many: Programmed semi-autonomous flight with one "pilot" controlling many aircraft.
- Licence Type:
   ∘ Basic: Line of Sight (LOS) control only.
   ∘ Advanced: Beyond Line of Sight (BLOS) capability, including flight plan filing.
- Airspace monitoring:
   ∘ Basic: Airspace monitor showing other RPAS in the area.
   ∘ Advanced: Basic features plus flight plan filing.
- Keys acts as the physical proxy of the pilot in the aircraft:
   ∘ They contain secure information that identifies the Key owner and the RPAS pilot.
   ∘ Keys enable pre-flight 'authorization' by sending on-board RPAS aircraft and pilot information to SIAM for validation against information registered in the SIAM databases CPIR and CAIR.
- CAT1-2 Keys are purchased by licensed RPAS pilots through a reseller.
   ∘ The pilot is the Key owner.
   ∘ Reseller registers Key owner/pilot information in SIAM.CPIR.
   ∘ A pilot may own only one CAT1 Key (for private use) and one CAT2 Key for business use) at any time.
- CAT3-6 Keys are purchased by eligible organisations direct from RelmaTech.
   ∘ The organisation is the Key owner.
   ∘ RelmaTech registers Key owner information in SIAM.CPIR.
   ∘ Key owners are responsible for allocating their Keys to licensed pilots in their employ, and for registering the allocation in SIAM via an interface.
- RPAS owners authorise licensed pilots who hold a CAT1 or CAT2 Key to fly the owner's aircraft by registering the pilot in SIAM.CAIR via an interface.

These measures also mitigate the risk of theft and unlawful use of RPAS aircraft and Keys, and the unauthorised use of agency RPAS by employees or third parties.

### 3.2 Airspace Management

SIAM's Flight Management Centre authorises and supervises flights according to Flight Operations Rules and Procedures as endorsed by the International Civil Aviation Organisation (ICAO) and national civil aviation regulatory agencies.

### 3.2.1 Flight Authorisation

An RPAS must have installed a registered and activated RPAS Key for the aircraft to operate.
- The pilot must use his/her own personal Key, or that allocated to him/her by his/her employer.
   ∘ RelmaTech champions that it be unlawful for a pilot to allow his/her personal Key, or a Key allocated to him/her, to be used by another person to fly an RPAS.
- After the pilot installs his/her Key in the aircraft and on aircraft power-up, the Key reads the AIN and sends the AIN and pilot identity information to SIAM for validation against information in the SIAM databases.
- On validation, the RPAS is enabled for flight - otherwise the aircraft will not fly.

### 3.2.2 Flight Profile

SIAM determines from information received from the RPAS Key and that entered by the pilot via the Pilot App whether the flight to be undertaken is LOS or BLOS.
- The default is LOS, and flight is restricted to within the regulated LOS definition.
   ∘ No Fly Zone and Incident Management rules apply if flight is attempted beyond LOS parameters.
- For BLOS, the pilot must submit a flight plan to SIAM via the pilot app.
   ∘ SIAM reviews and accepts/modifies/rejects the requested flight plan, taking into consideration existing No Fly Zones, obstacles and obstructions, and the registered and active flight plans of other RPAS operating in the area of interest. The app may display a trace of a BLOS test flight avoiding a Temporary NFZ. The app may also display a BLOS track of an RPAS avoiding a Temporary No Fly Zone (SIAM Test)
- SIAM can also interface with systems designed on the one pilot/system controller to many RPAS concept of operations (the B categories in **Figure 5****),** such as the proposed Amazon Prime Air delivery system.
   ∘ Flight authorisation and flight profiling procedures are the same as for BLOS operations.
- All flights are logged and stored for a period of time should post-flight follow up be required.

### 3.2.3 No Fly Zones

SIAM enables the establishment, display, supervision and enforcement of long term (permanent) and short term (temporary) No Fly Zones (NFZs).
- Permanent NFZs can be created and managed in SIAM by RelmaTech as approved by regulatory authorities.
- Temporary NFZs can be easily created and managed in SIAM by authorized agencies (e.g. CAT4, CAT5 and CAT6 Key owner/operators) via a secure interface.
   ∘ RelmaTech supervises this capability to the requirements of regulatory authorities.
- Flights within a NFZ are authorized according to Key category and permissions against the specified restrictions of the NFZ.

### 3.2.4 Detect and Avoid

SIAM may provide separation assurance and collision warning capabilities through an innovative 'My Zone', real-time airspace display, and warning messages to RPAS pilots.
- RPAS will have their own defined airspace (i.e. a protective 'bubble') which will be treated as a NFZ for other aircraft operating in the area.
   ∘ NFZ and Incident Management rules will apply.

In summary, SIAM enables authorities to:
- Identify drones and their pilot/operator, verify their permissions and, where necessary, restrict their operations.
- Determine whether the flight to be undertaken is restricted to LOS or permitted for BLOS, and oversee the flight accordingly.
- Establish and enforce No Fly Zones.

These and other SIAM capabilities, including separation assurance and collision warning, and the ability to interface with control systems designed to simultaneously operate multiple drones, ensure that drones can be safely operated within an secure integrated managed airspace.

With the global take up of low flying drones continuing at a rapid pace, SIAM answers the concerns of policy makers, regulators and the public, making SIAM the enabling solution for which the emerging drone industry has been waiting.

### Section 4: Technical Description

This section provides an outline of the technology and approach used to create a Secure Integrated Airspace Management (SIAM) system for RPAS operations typically operating below 152.4m (500 feet)

A technical overview first provides a high level summary of the various aspects of the solution. A description of the technology used to create and manage secure identity data for both the aircraft and the pilot, and how this is communicated and managed by SIAM is also provided. A section on airspace management outlines how digital identity is used and managed in combination with real time aircraft location tracking, and how permanent and temporary No Fly Zones are set up and managed. Finally a description is provided on how No Fly Zones are enforced. The reporting capabilities of SIAM are also presented.

### 4.1 Technical Overview

SIAM integrates proven technologies and concepts used in civil aviation, cloud computing, mobile communications and information management. It is the unique combination of this range of complex but established technologies that has created the highly innovative SIAM system.

SIAM provides the following key functionality through separate technology modules:
- **Identity:** digital identification of pilot and aircraft.
- **Airspace Management:** track RPAS flights against current regulations, establish and monitor No Fly Zones, live feeds to appropriate 3rd parties.
- **Incident Management:** enforce No Fly Zones and initiate legal intervention if required.
- **Reporting:** system performance metrics, incident reporting, 3rd party application data.

The key operating principles that have been adopted which underpin each element of the SIAM solution are:
- **Security:** for the whole system to be secure, all elements of the system must demonstrate a high level of inherent security
- **Real Time:** The system must operate in real time, tracking users whenever and wherever they operate

- **Reliability:** each system element must be reliable given the nature of the system and its potential widespread use
- **Scalability:** the system must be capable of scaling to many millions of devices
- **Proven performance:** each system element must be proven in its designed operating environment, and must have a track record of volume stability and high performance
- **Global Reach:** The system must be able to operate globally across national boundaries

SIAM comprises a number of elements, which combine to form the system:
- RPAS KEY: smart card containing the digital identity of the pilot.
- RPAS Embedded Mobile Module: cell-phone module providing the unique identity of the aircraft and communications to the SIAM system.
- SIAM Core System: high performance secure cloud-based system comprising:
   o SIAM.CIPR (central pilot identity register),
   o SIAM.CAIR (central aircraft identity register),
   o SIAM.FMC (flight management centre),
   o SIAM.CIM (central incident management system),
   o SIAM.CFR (central reporting framework).
- **SIAM RPAS Pilot Interface:** NOTAMS, view of flight track, visibility of other RPAS, visibility of NFZs, visibility of obstructions and obstacles, Flight Plan submission and approval.
- **SIAM RPAS Owner Interface:** NOTAMS, view of flight track, visibility of other RPAS, visibility of NFZs, visibility of obstructions and obstacles, authorize pilots to use RPAS, request permitted reports.
- **SIAM RPAS Key Reseller Interface:** Upload RPAS Key owner information into SIAM.CIPR.
- **SIAM RPAS Manufacturer Interface:** Upload RPAS Aircraft Identification Number and serial number into SIAM.CAIR, request permitted reports.
- **SIAM RPAS Reseller Interface:** Upload RPAS Owner identification information into SIAM.CAIR.
- **SIAM RPAS Interface:** Bi-directional communications interface to transmit SIAM.PI and SIAM.AIN for validity check against SIAM.CPIR and SIAM.CAIR, request authorisation to fly from SIAM.FMC, receive authorisation or rejection for flight permission, provide flight position and status data to SIAM.FMC, receive NFZ data, receive notification to Return to Base or Return to Pilot.

### SIAM.CIPR:

- Each RPAS pilot has a unique identifier which must be physically present and valid before the aircraft can be operated (SIAM.PI)
- A pilot's licence may be revoked or terminated at any time which would cause the aircraft to return to start if in flight, or to not operate if still on the ground
- Each aircraft has a unique identifier (IMEI) which is broadcast back to a central server during flight
- The position and track of each aircraft is transmitted each 30 seconds to a central server where it is logged. This information may then be aggregated with all craft in an area and transmitted for airspace management applications and services, and warnings
- Hard No Fly Zones and Soft No Fly Zones may be uploaded to the aircraft and added to its database at any time
- Any airspace breaches by an aircraft are logged
- SIAM.PI is a unique worldwide RPAS identifier (Pilot identifier)
- Issued by the SIAM.CPIR system on pilot registration
- Issued to all private / commercial registered RPAS pilots
- The Aircraft Identity Number (AIN) is adapted from the GSM IMEI; a unique worldwide identifier for the mobile phone
- It is the hardware element that is burnt into the mobile hardware world wide
- As of 2004, the format of the IMEI is AA-BBBBBB-CCCCCC-D
- The SIAM.PI is adapted from the SIM IMSI; a unique worldwide identifier for the SIM card
- mobile carrier ID on the SIM card issued buy all mobile phone carriers

### SIAM RPAS Key

- SIAM RPAS Key (SIM) has the GSM and SIAM application on the same SIM card
- Both applications have the same security level
- GSM application is used to authenticate the mobile network connection as it is today
- SIAM application is used to validate and authenticate the RPAS hardware and RPAS pilot to the SIAM network

It may be possible to have two separate SIM cards as the existing security on a mobile card SIM may prevent adding the ISAM application.

ISAM (RPAS) high level logic is the following:
- Check for and get valid RPAS Key;
- Check for GSM connection;
- Check for GPS connect;
- Check for modem IMEI number;
- Setup secure communications to RPAS server (registration and licence check-down load any new soft no fly zones);
- Auth UAV startup;
- Send updates (lat, long, alt, direction, speed) every 3.048 m (10 foot) of change or every 30 seconds.

### SIAM RPAS key registration and reporting framework (SIAM.CIPR and SIAM.CRF)

- A secure web site provides a portal for registration of commercial and private user data by the Licenced RPAS Key Issuer (LRKI) to obtain a valid SIAM RPAS key
- This web site will also as the portal for authorised users to obtain reporting data from the SIAM Central Reporting Framework (SIAM.CRF). This will include the provision of a log of all conducted and active flights and all infringements of any airspace rules

### RPAS Key - Permission to fly

### On power up:

- Check for a Network connection ( GSM up and running - if not, validate the GPS location and the SIAM.PI was valid on last successful communication - not older than xx days e.g. time out. Flight will adhere to stored NFZs. Update data as soon as GSM comms restored; invoke return to base if licence or AIN have been invalidated)
- Check SIAM.PI present. If not we fail - Secure SIM card must have a valid SIAM.PI
- Get the AIN (IMEI) from the GSM modem
- Get the public key of the SIAM Service from the live server (comms required)
- Use the SIAM public key to encrypt and send the IMEI and ISAM.PI for registration
- The server looks up the IMEI, finds the SIAM.Kᵢ generates a random number to produce signed response and stores this signed response 1 - server sends the Random number to the RPAS
- RPAS passes this random number to the SIM card which produces a signed response 2 and a public key.
- Signed response 2 and public key is passed to the server - if valid based on server validation of both the signed response 2 and generated public key ( registration completed)
- Server sends temporary registration certificate to RPAS with xx day time out

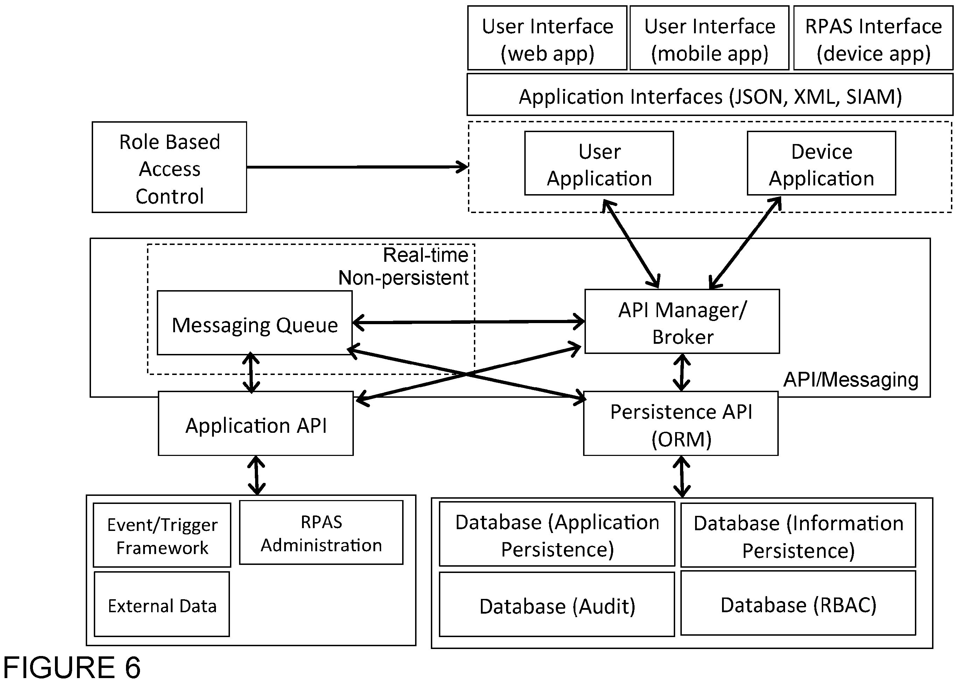

The general architecture of the SIAM system is shown in **Figure 6****,** with various User and RPAS interfaces connecting into the main system. System architecture and data flow is very similar to that used in high performance, secure financial trading systems, and is optimised for cloud deployment facilitating global operation.

### Development Infrastructure

To develop the SIAM system we have used a range of facilities and tools.

The SIAM Core System has been ported to ACS (Amazon Cloud Server), a Tier 1 cloud infrastructure solution providing a high availability server platform.

For the drone element of the solution we have used the DJI Phantom 3 as the base aircraft platform to work with, combined with a variety of off the shelf GSM development modules, smart cards and smart card readers. We have also used smart phones loaded with RPAS code to test and load the SIAM Core System to test functionality.

### 4.2 Identity

Digital identity in SIAM is achieved with the use of Smart Card technology. Specifically, Mobile SIM technology combined with a SIAM app embedded on the SIM, or Smart Card. This technology has demonstrated over the last 15 years that it is highly secure, provides unique identifiers for the pilot and the aircraft, can host secure applications, and has scaled to over 3 billion devices without being spoofed or hacked.

The system is as follows:

### 4.2.1 Identity - the physical elements

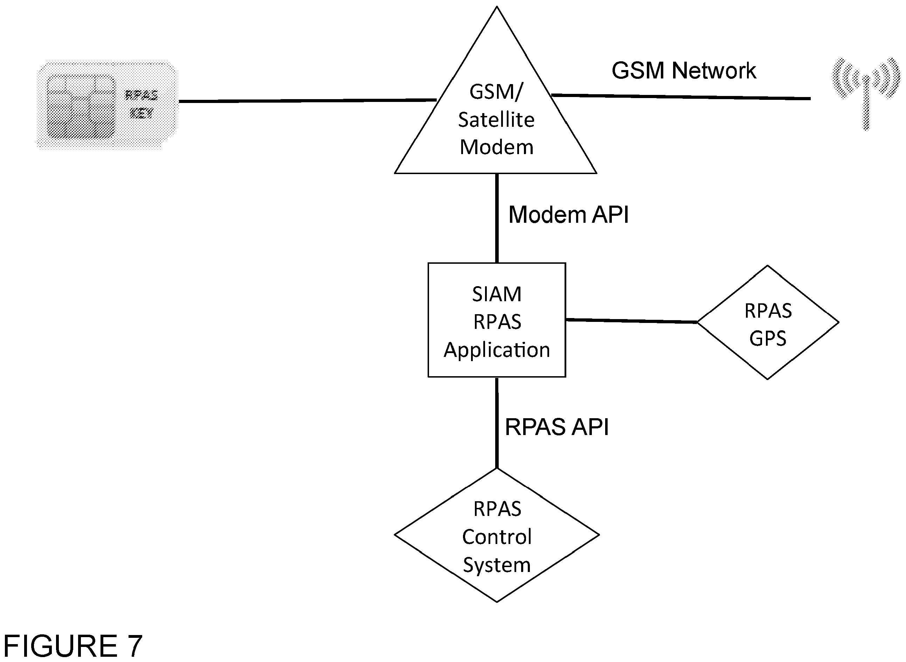

**Figure 7** shows an overview of the RPAS Key and RPAS embedded Mobile Module. The RPAS Key is an enhanced GSM SIM card; additional code and functionality is embedded securely on the SIM at point of manufacture. The Embedded Mobile Module comprises the GSM Modem and the SIAM RPAS Application, shown in blue.

These elements control the functionality of SIAM on the aircraft. The RPAS Control System and the RPAS GPS are the control system and native GPS built into the RPAS aircraft (depicted in Orange).

### RPAS Key

The RPAS Key **(****Figure 7****)** is a cell-phone SIM (Secure Identity Module) card with an embedded SIAM RPAS Application. The SIAM RPAS Key (SIM) contains both GSM and SIAM applications; both applications have the same high security level and are used to perform two different tasks:
- GSM application is used to authenticate the device and mobile network connection and provide secure communications.
- SIAM RPAS Application is used to validate and authenticate the RPAS hardware and RPAS pilot to the SIAM network.

The RPAS key is a highly secure and trusted micro-processor which contains the unique pilot identity number (SIAM.PI - analogous to the IMSI number in the cellphone system) which is used to identify and validate the pilot and his/her permissions to fly the aircraft. A valid RPAS Key is always needed for flight.

### Embedded Mobile Module

The Embedded Mobile Module **(****Figure 7****)** is a miniature cell-phone module which characteristically has ultra-low power consumption (typically 25mW in idle state - 1.25W average power during burst transmit) while being physically small and low weight (typically 10-20gm). The units are manufactured in high volume today (found in more than 3 billion mobile handsets) and are low cost.

Each Mobile Module has a unique digital identity (the Aircraft Identity Number, SIAM.AIN) which is used by SIAM to identify the aircraft and its owner. The SIAM.AIN is analogous to the IMEI number used in a mobile handset. The AIN is communicated back to the central server for each flight for validity checking.

Details of the Aircraft AIN are provided to SIAM by the RPAS manufacturer and details of the owner are captured at the time of sale, again analogous to buying a mobile phone.

### 4.2.2 Identity - the SIAM databases

The SIAM system stores pilot and aircraft identities in two separate central databases; the Central Pilot Identity Register (SIAM.CPIR) and the Central Aircraft Identity Register (SIAM.CAIR).
- The SIAM.CPIR contains the pilot's details including SIAM.PI, name, address, licence type, licence validity.
- The SIAM.CAIR contains details of the aircraft including SIAM.AIN, RPAS make and model, and details of the aircraft owner.

The SIAM.CPIR is used to validate the status of a pilot's licence. The pilot's licence can be shown to be valid, to have lapsed, or to have been suspended or revoked through infringement.

When a pilot inserts his/her RPAS Key into an aircraft, SIAM interrogates the SIAM.CPIR and CIAM.CAIR databases to validate ownership and permissions for specific pilots to fly specific aircraft.

### 4.2.3 Identity - work flow

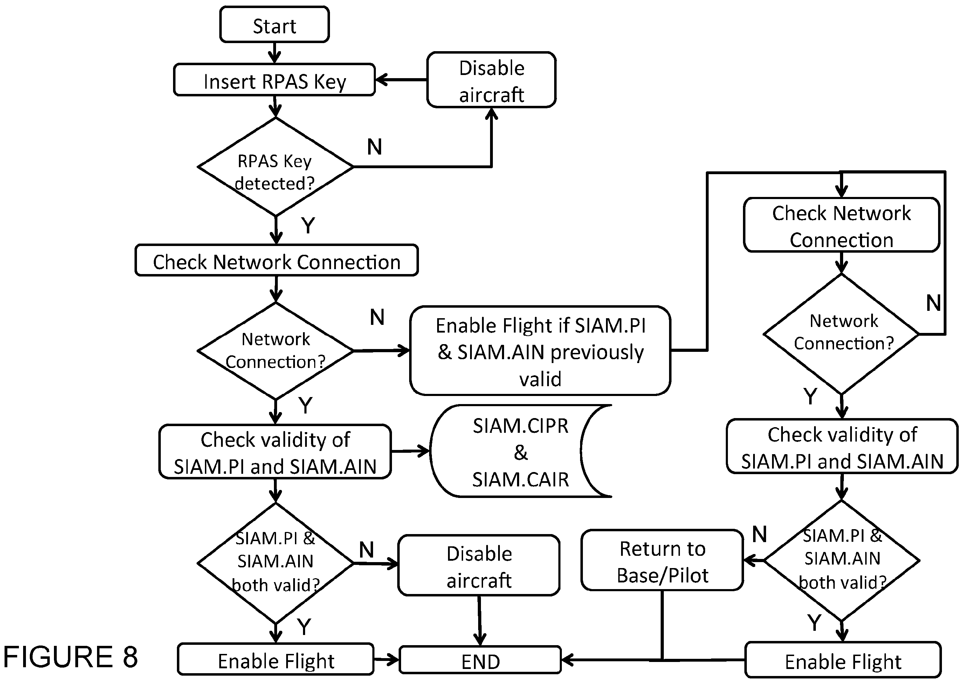

**Figure 8** shows the work flow for SIAM Identity checking. The work flow for identity management for flight is as follows:
1. Pilot inserts his/her RPAS Key into the embedded Mobile Module in the RPAS. The RPAS Key contains the pilot's unique identity number in SIAM (SIAM.PI). If RPAS Key is not present then aircraft is disabled for flight - RPAS Key must be present.
2. The RPAS Key gets the unique aircraft identification number (SIAM.AIN) from the embedded Mobile Module.
3. The RPAS Key establishes a secure Network connection to SIAM:
   - If mobile connection is established proceed to "4" - validation;
   - If no mobile connection can be established, verify from SIM memory that the SIAM.PI was valid on last successful communication. If positive then flight is permitted and will adhere to stored NFZs. If negative then aircraft will not fly.
   - As soon as communications are restored validation is run;
      ∘ If validation positive then flight continues.
      ∘ If validation fails then system advises the pilot and the RPAS control system that a return to base or return to pilot condition has been met, and the RPAS will activate its Return to Base or Return to Pilot feature. (Note that, for legal reasons, SIAM does not command the RPAS or its pilot to take an action - it provides an advisory service to the RPAS pilot and the RPAS control system.)
4. Establish secure mobile communications.
5. The RPAS Key encrypts and sends the SIAM.AIN and SIAM.PI to SIAM for validation and flight registration.
6. SIAM checks validity of RPAS Key and SIAM.AIN from SIAM.CPIR and SIAM.CAIR databases:
   - If the RPAS key is valid and the SIAM.AIN is valid then the aircraft is enabled and flight can proceed.
   - If either is invalid the aircraft remains disabled and will not fly.

### 4.3 Airspace Management

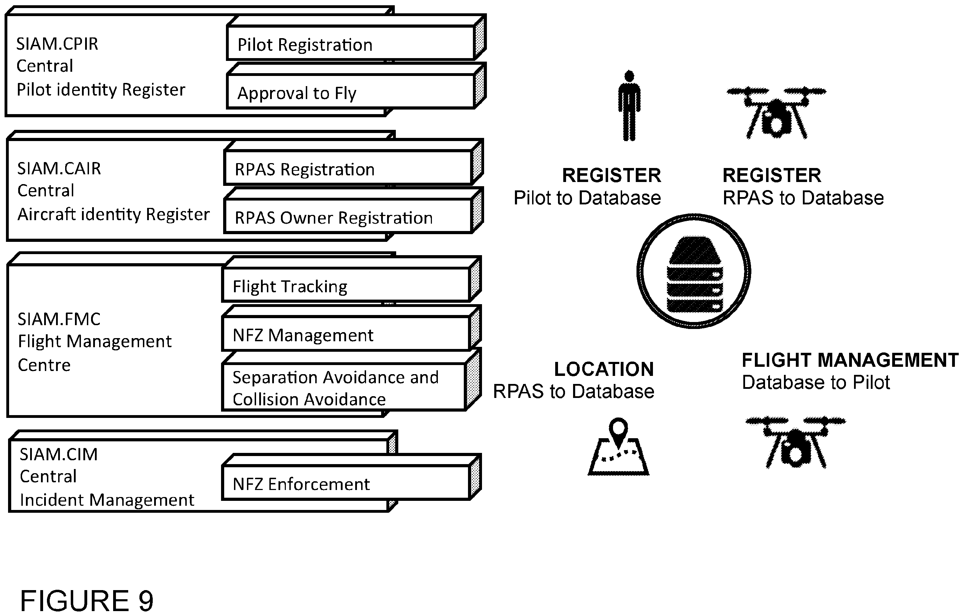

Airspace Management takes place in the SIAM Core System and is handled by the SIAM.FMC interacting with the two SIAM databases SIAM.CPIR and SIAM.CAIR as shown in **Figure 9****.**

Central to airspace management is the location of the RPAS. Accurate location is best provided by satellite positioning systems, demonstrating accuracy to approximately 1m in the case of GPS, or cm/mm accuracy using the European Galileo system. Satellite based positioning is far more accurate than location derived from mobile signals; SIAM therefore uses proven off-the-shelf satellite technology for high accuracy, reliable location.

The application on the SIAM RPAS Key obtains the RPAS position from the GPS module in the RPAS via API (Application Program Interface) and then transmits that location securely via the mobile network using a highly efficient short data burst to the SIAM servers. SIAM combines the location data with the identity data to plot RPAS location and identity on a map. SIAM currently utilises established Google mapping data to show RPAS tracks, but any third party mapping source could be used.

By using the selected mapping application as a base, SIAM.FMC can establish No Fly Zones (both permanent and temporary). This is achieved by drawing a region to represent the NFZ. Access to the system is provided by a secure portal with secure login. Only authorised users can establish or remove NFZs. Map data, including flight tracks and NFZs, can be viewed securely by users of the system (e.g. government agencies, air traffic control, etc.), and by pilots via the SIAM App. All flight paths are logged and stored for a period of time (as determined by regulatory requirements) should post-flight follow up be required. A separation assurance and collision warning feature may also be provided. Flight tracks may be analysed in real time to determine if there is risk of convergence, and operating pilots notified accordingly.

### 4.4 Incident Management

Incident management is executed in SIAM via SIAM.CIM. This module monitors flight paths and compares the tracks with established No Fly Zones.

Where an RPAS is seen to be approaching a NFZ a warning is sent to the pilot advising him/her that if they continue on their course then they will breach a NFZ. If an RPAS breaches a NFZ the pilot will be instructed to exit the zone. If the pilot does not respond a signal will be sent to the RPAS control system via the embedded Mobile Module advising the RPAS control system that a return to base or return to pilot condition has been met, and the RPAS will activate its Return to Base or Return to Pilot feature. (Note that, for legal reasons, SIAM does not command the RPAS or its pilot to take an action - it provides an advisory service to the RPAS pilot and the RPAS control system.)

SIAM.CIM can then advise the appropriate authorities that an infringement has occurred and, if required, issue an infringement notice on behalf of authorities to the offending RPAS owner and/or pilot. As flight tracks are automatically logged and stored, SIAM retains evidence of the infringement. SIAM.CIM can also change the status of the pilot's Key in SIAM.CPIR to 'suspended' or 'revoked' based on the infringement rules, as approved by regulatory authorities and law enforcement agencies, thereby disallowing the pilot from conducting future flights until the active infringement has been legally dealt with and the suspension lifted. The capabilities of SIAM.CIM may also be expanded to include incident reporting of separation breaches and near collisions.

### 4.5 Reporting

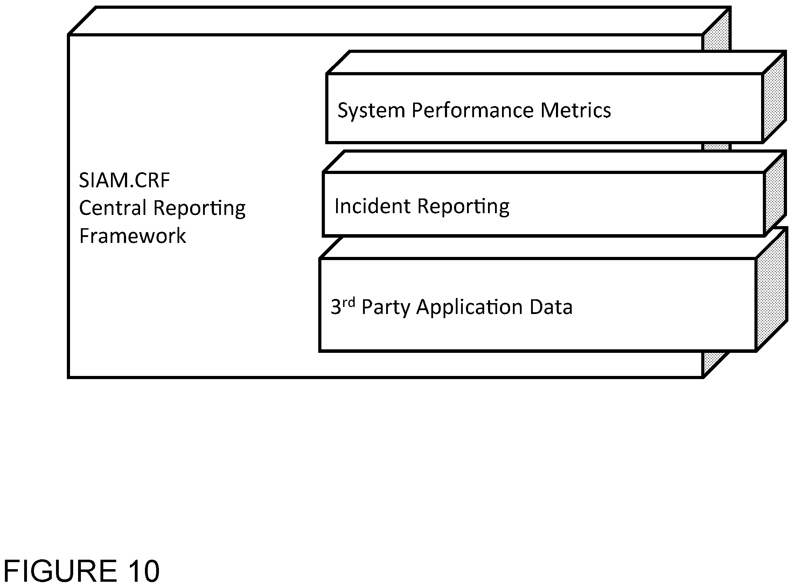

As an operating system SIAM has a reporting capability that enables a suite of standard and custom reports to be produced, transmitted and stored. SIAM.CRF (SIAM Reporting Framework) is the module which provides this facility as shown in **Figure 10**. Basic output provides details of system performance and incident reporting. Output includes:
- Pilot identity and status;
- Aircraft identity and status;
- System performance and usage statistics;
- Logs of flight tracks;
- No Fly Zone records;
- Incident reporting;
- Live feeds and notifications to authorised 3rd parties.

It should be noted that SIAM live feeds can also be fed into civil aviation air traffic control systems for monitoring RPAS traffic above and below 152.4 m (500 feet), bringing the safe integration of RPAS into the national airspace closer to reality. A portal for 3rd parties to use the system may be provided, either for monitoring traffic or to run specific applications. APIs and command sets may be made available. The capabilities of SIAM may provide enormous benefit to 3rd party users for a wide range of applications, be they recreational, commercial, institutional, or government related.

### 4.6 Summary

SIAM utilises innovative world-class technology and techniques to provide a global, secure, scalable, proven solution to address the issues of policy makers, regulators, and the public. The development system has been ported to Amazon Cloud Servers and already has logged flight tracks in both the UK and the US. Working in combination with existing transportation systems SIAM ensures that low level drone operations are safe for the full range of personal, commercial, institutional, government, civil service, national security and defence users. Drone aircraft and pilot identification is solved by employing proven digital identity techniques and secure global databases, while real time airspace monitoring combined with the management of permanent and temporary no fly zones ensures safe drone operation for all.

In addition, the ability to provide data feeds to authorised 3rd party applications ensures the utility of SIAM to the widest possible range of industry stakeholders and brings the safe integration of RPAS into the national airspace closer to reality. With the global take up of low flying drones continuing at rapid pace, SIAM is the enabling solution that the emerging drone industry needs.

### Section 5: Operational Description Covering System Variants

### 5.1 Identity

### 5.1.1 Vehicle/object identity

Utilising mobile SIM and card reader technology, SIAM provides unique digital device and pilot/driver identification in a secure, reliable, scalable manner. This is achieved via the IMEI number of an Embedded Mobile Module that is incorporated into the vehicle. The EMM may be embedded in a variety of vehicles and objects:
- Vehicles include aircraft, land based vehicles, or maritime vehicles.
- Aircraft types include RPAS vehicles as well as Civil Aviation aircraft - General aviation, private aircraft, commercial aircraft, cargo, etc.
- Objects, which may be being shipped, stored, cared for, managed.

Attaching an EMM or equivalent control unit to an object will allow it to be uniquely identified. Data associated with the digital identification can then be position/location, ownership, home location. This technique can be used for high value items, items requiring high security, items whose physical location is critical due to dangerous properties etc.

### 5.1.2 Pilot/Driver Identity

The RPAS Key/SIM/Key is used to provide the secure identity of the pilot or driver of the vehicle. In the case of objects the Key can be used to identify the person responsible for safe transit/passage or care/maintenance of the object. The Key may be assigned privileges or permissions depending on its use - aircraft pilot flight permissions relating to licence type, or access permissions if an object or vehicle etc.

### 5.1.3 Interaction of EMM and Key

The combined presence of the EMM and the Key can be used to enable permitted operation of the vehicle or device, or to enable specific action to be taken. For example:
- A valid and authenticated EMM and Key are required to be present together to allow the vehicle to be operated
- A key of a certain authorisation/licence category is required to access a location or a no fly zone

This functionality applies across air, land and sea, and supports uses cases ranging from speed and distances restrictions to anti-theft.

An example is Vehicle Driver Permissions & Monitoring:
- Can apply to any vehicle (land, water, aircraft) driven by a person.
- Vehicle has EMM installed, which takes an RPAS-type Key that identifies the driver and his/her 'permissions' - the driver's Dept of Transport 'licence' has a chip in it just like a credit card or e-Passport - like we show for the RPAS Key.
- Vehicle EMM is able to read driving conditions (speed, fuel level, tyre pressure, wipers operating Y/N, etc.) and certain driver-related sensors, for example number of passengers based on seat belt warning, so can detect how many people are in the vehicle, and possibly judging by their weight if they are infant, adolescent or adult.
- Vehicle is 'activated' by a driver installing a valid license 'Key' (as in SIAM for RPAS)

A case example: Probationary automobile driver in Australia:
- Must be 18 to get a Probationary Driver's license.
- First year speed is limited to 80kph, no more than one passenger in the vehicle, not permitted to drive after 10pm, not permitted to drive a high-powered vehicle.
- License 'key' would not allow vehicle operation if number of pax exceeds allowable number (senses bums on seats).
- Would disable vehicle after 10pm curfew unless lifted by an authorized person (i.e. parent, guardian or ....police).
- Would report occurrences when speeds exceeds 80kph via txt to parent/guardian.
- Would not allow vehicle to start if it is in the high-powered category.
- Would track vehicle movements - so just exactly WHERE is my son and my car?

Similarly for other restrictions/permissions, such as drivers who are elderly, have restricted licenses (e.g. due to impairments, vehicle type, etc.), etc. etc.
- Driver can't start a truck/bus if licence is not 'endorsed' for such.
- Driving habits of elderly could be monitored to determine whether they are safe on the road or not.
- Drivers could be 'authorised' on some cars but not others (i.e. on mum's car but not dad's, to drive a work vehicle, etc.)

A further example is Security and Accountability - it is difficult to steal a vehicle that requires this type of ID device to start and operate it.
- Again, it's the driver (aka pilot) who is responsible for the operation of the vehicle, not necessarily just the owner.

In a world characterised by the internet of things the identity of items, including their ownership and where relevant legal/permitted operator, becomes important. SIAM, with the EMM and key, facilitates this.

### 5.1.4 Black Box Function

The interaction of the EMM and the Key allows "Black Box" functionality to be initiated. The internal memory on the Key can store position and other data on a rolling basis (the Key memory is also used as a buffer to handle to condition where communications drops out). In this way a rolling record of situational data can be stored on the device as well as in the SIAM Core System so that if there is an incident records can be downloaded from the Key and analysed.

Examples of data that may be stored in the black box of the controller are, but not limited to:
- based protocol (update) - keep start position and end position;
- Craft ID, Pilot ID or session key of ratios flight;
- time stamp;
- latitude, longitude;
- altitude, heading, speed;
- battery level;
- RF Frequency used.

### 5.2 Positioning

SIAM monitors the position of digitally identified vehicles or objects.

### 5.2.1 Basic Tracking

Basic tracking is the core of SIAM. Digitally identified objects have their positions tracked via satellite navigation technology. The position is obtained wither from the vehicle's/object's on-board satellite location system, or optionally from a location system incorporated into the EMM. The position can be monitored and compared with basic flight permissions or parameters:
- For LOS operations approximately 400m from the pilot and no higher than 121.92m (400 feet)
- For BLOS operations position is tracked against a flight plan or permitted flight corridor
- SIAM provides a highly secure, independent system monitoring vehicle movement that can provide elements of safety and protective backup to the main control system. In the event that the vehicle's main control system is compromised via cyber attack or controller hack, the independent, secure SIAM system can provide instruction to the vehicle's control system to return to base, or provide a reliable track of the vehicle's actual location.

### 5.2.2 High Accuracy Tracking

There are three satellite navigations systems available for use today. GPS, GLONASS and Galileo. GPS and GLONASS accuracy is comparable. Galileo claims to be able to provide millimetric or centimetric accuracy. This high degree of accuracy opens up a wide range of application possibilities which include:
- Data logging of vehicle movement enables high accuracy tracks of commonly used flight paths to be determined
- Mass market UAV package delivery to specific locations (high location accuracy means packages can be dropped in precise locations
- High density traffic corridors (air/land/marine) may be implemented with position assurance
- High accuracy location leads to improved separation assurance and collision avoidance. This ultimately leads to safe flight operations with higher density flights
- High-density formation flying applications can be conducted with greater safety. This includes surveying, monitoring, visual inspection
- Semi-autonomous operation becomes more realistic as vehicles can be positioned more accurately, across air, land and marine applications.
- High accuracy tracking permits the gathering of high accuracy mass flight track data which can be used to establish flight corridors, or to establish charts of clear airspace.
- Combining high accuracy location with on-board monitoring enables the practical 3D charting of phenomena and parameters including, but not limited to, radio field strengths, magnetic fields, light or solar energy densities, wind strengths, architectural and civil surveying
- Combining SIAM-equipped vehicle with a camera can enable high definition, high accuracy photo maps/charts or surveys to be created.

### 5.2.3 Alternative Tracking

There are other alternate methods of location determination that we can employ with SIAM. These include, for example:
- GSM or other cellular standard tower mapping: using data gathered from drone flights to build up a 3D map from GSM tower data by utilising data obtained during flight from nearby towers; Absolute radio frequency channel number, in decimal format, Receive level, in decimal format, Receive quality, in decimal format, Mobile country code, in decimal format, Base station identity code, in decimal format, Cell id, in hexadecimal format, Location area code, in hexadecimal format, Receive level access minimum, in decimal format, Transmit power maximum CCCH, in decimal format, Timing Advance, in decimal format.
- WiFi, or other wireless data standard, mapping: using data gathered from drone flights of WiFi hotspots we can build up a 3D map of WiFi data to generate location information. We will gather BSSID (base station mac address), SSID (base station public name), RSSI ( Receive power level).
- Bluetooth and LoRA mapping: As per GSM etc. tower mapping and WiFi etc. mapping, we can achieve a similar result using Bluetooth and LoRA signals.

By combining position data using multiple techniques we can build up increasingly detailed position data for the drone.

### 5.3 Communications

SIAM incorporates communications capability with the EMM. Communications is secure, scalable, reliable, and low bandwidth in its requirement. Communications is data based and utilises 2G/3G/4G/5G technology. Variants of the SIAM system may also use satellite communications or direct radio technology such as LORA or Wi-Fi. ADS-B may also be used as a transmission path. In fact any wireless communication protocol could be exploited.

Burst transmission may be used to communicate:
**Vehicle/object:** Vehicle/object type, manufacturer, model, country of registration, type approval, certification, ownership, position, request to operate, instruction to return to origin/pilot
**Pilot/driver:** Name, address, phone contact details, licence category and status, flight/operation permissions
**Other:** The established communication path can be used for a variety of general communication tasks:
   - Communicating payload data securely- e.g. parameter measurements
   - Relaying radio signals, thereby forming a long distance connection, or a 3D mesh network
   - Detecting other vehicles based on their transmissions; facilitates formation flying and collision avoidance/separation assurance

### 5.4 Jamming Detection

Inevitably security will be an issue for any system. To increase the security of the SIAM system we can detect for jamming. Once GSM jamming is detected, we flag an alert and capture data on timing, location, field strengths, and other relevant data and store in logs. We can also instruct the drone to take specific action once jamming is detected; for example fly back to pilot, or execute a pre-saved route.

### 5.5 SIAM Core System

SIAM Core System combines the various elements of the system and coordinates behaviour and action.

### Registers

- Contains all details of vehicle/object, pilot/operator, relevant regulatory and policy framework, and checks registers to ensure permitted operation against any defined operational parameter

### Flight/Track Management

- Flight or track management to monitor in real time the location of the device
- No Fly Zone/Geofence set up
- Separation assurance and collision warning
- Manage and safeguard semi-autonomous operation vs direct control

### Incident Management

- Initiate permitted action (issue warning, instruct control system to take action) if defined operational parameters are breached:
- LOS limits are breached
- BLOS flight/movement plan is breached
- Collision with another device is likely.
- No Fly Zones are/about to be breached
- Permitted speed is exceeded (air/land/marine application)
- Report breach/incident

### Geo Fencing/ Geo Zones

- Real time geo fences can be established to monitor vehicles/items crossing the fence.
- Geo fences can be activated for specific times (e.g. after dark, during rush hour etc).
- Cars can be fitted with the system so when they arrive home and enter the geo zone home lighting and security settings are triggered.
- Objects that cross a geo fence can be logged and recorded as having left or entered for logistics applications
- Geo zones can be used for charging - car parks, marine berths, landing fees etc

### SECTION 6: TECHNOLOGY DESCRIPTION FOR SYSTEM VARIANTS

All principles and technology implementations apply to vehicle and object applications across air, land and sea operations.

### 6.1. Identity

### 6.1.1 SIM and EMM (base solution for RPAS vehicles (Drones) and for CA aircraft)

The basic implementation of SIAM Identity solution utilises a SIM and Embedded Mobile Module (EMM). The EMM hardware module is directly installed in the aircraft (RPAS or CA aircraft) and provides an inbuilt mechanism for identity (SIAM.AIN). The EMM also incorporates a basic cell phone transmitter and so incorporates a secure communications path. In all instances the EMM is installed in the aircraft at the point of manufacture, or is retrofitted by the manufacturer or authorised workshop. The manufacturer or authorised workshop provides details of the aircraft, its owner and the fitted SIAM.AIN to the SIAM system.

EMM module may collect the tracking data from the sensor (GPS ,Barometer) and upload the tracking data to backend server. This also may include storage local flight path, ALG information, FTP download Flight Path as well as store the debugging information

### 6.1.2 SIM and card reader remotely connecting (retrofit for drones, and basic implementation for CA)

In the case of existing RPAS or aircraft, or as a more simple implementation of the system for CA aircraft, the system could be configures such that the SIM is presented to the RPAS or aircraft via a smart card reader. This reader would connect to the aircraft system physically via USB port or other interface, or wirelessly via Bluetooth or Wi-Fi or other wireless technique. As in the basic EMM solution, a SIM card would need to be present before aircraft operation could take place.

### 6.1.3 Smartphone secure pairing (via Bluetooth, Wi-Fi, cable etc)

A further option for pilot validation would be via Smartphone. The SIAM Pilot app would need to be loaded onto the smartphone, and the pilot would enter his credentials, including licence number, into the phone. At the point of entry the details would be validated against records held centrally, and a passcode would be needed to complete authentication. Once the pilot's credentials had been verified on the app, then the smartphone can communicate with a module in the aircraft to enable flight to take place. Connection can take place wirelessly or via cable, and in the case of the RPAS could be with the aircraft or the controller. Once again, verification that the pilot is present and his/her credentials are valid is done before flight can take place.

In the case of CA use, as the pilot is present and if the aircraft is unpressurised, the Smartphone could be used as the transmitter for location and flight status data if required. Further, the identity of the aircraft would be entered into the SIAM Pilot app by the pilot prior to take off, and pilot's credentials can be verified against aircraft type. Further, the data entered by the pilot can be verified by ATC separately if required.

A variant of this approach is to use a purpose-built device with internal module. There could be a wide range of devices utilised for this purpose such as a GPS unit carried by the pilot or TETRA/PMR terminal etc. This device would replace the smartphone, though a method of enabling separate communications may be required for data transmission (such as pairing with a smartphone and using the hotspot facility) depending on the facilities of the host device.

### 6.1.4 Transponder

Fitting the aircraft with a transponder allows supplementary secure communication for position determination, collision avoidance and separation assurance, or for communications; aircraft to ground, aircraft to aircraft.

### 6.2 Positioning

### 6.2.1 GPS (Base solution)

There are a number of ways in which location may be determined, but the most simple solution for providing reasonable accuracy is via GPS (US) or GLONASS (Russian) or a combination of both. The GPS/GLONASS receiver can be integral to the aircraft with an API used to pass data to the EMM, or can be integrated into the EMM.

### 6.2.2 Galileo (high accuracy)

The Galileo (European) system promise high location accuracy; millimetric and centimetric accuracy is claimed. A suitable receiver provides the signal to the EMM - either via API from a receiver installed in the aircraft, or via a receiver integrated into the EMM. High accuracy positional data may be used for a variety of applications that would be impractical using GPS or GLONASS. These include semi-autonomous delivery, high accuracy surveys or charting.

### 6.2.3 Further functionality and features arising from high accuracy positioning

- Delivery applications; semi autonomous delivery with high accuracy positioning for delivery points
- Path tracking; high density flight paths where low separation is managed with the support of high accuracy positioning
- Formation of airways in 3D space; high accuracy tracks enable the accurate mapping/charting of safe flight paths or flight corridors. This produces a practical "3D road map" for safe flight operations where main trunk routes and spur routes can be defined
- Right of way and thoroughfares; high resolution positioning enables clear establishment and management of flight paths with priority routes, right of way routes, and thoroughfares.
- Separation assurance and collision avoidance; High resolution positioning provides reliable separation assurance and collision avoidance, especially in high density traffic areas. This increases safety in flight operations.

### 6.3 Communications

### 6.3.1 Basic GSM communications and derivatives

- GSM with SIM; the basic SIAM implementation consists of the EMM and an RPAS Key. These are the basic elements which provide digital identification of the aircraft/vehicle/object and the pilot/driver/operator
- GSM with no SIM - soft SIM; There are technology variants which adopt a soft SIM approach to the implementation of the GSM standard. In this variant no SIM card is used, but the EMM is "programmed" with the attributes of a SIM card. This required connection to an authorised central server such as the SIAM Core System.
- By GSM and derivatives we refer to 2G/3G/4G/5G communications technologies.

### 6.3.2 Satellite communications

In some instances, particularly in civil aviation, maritime operations, and land operations in remote locations, satellite communications provide a more effective communications path. The principles of digital identification of the aircraft and the pilot are upheld.

### 6.3.3 LoRa

- LoRa; Wireless data communications at low bit rates but over long distances.
- LoRa modules can be incorporated into the EMM to allow an alternate path for airground communications, or for aircraft to aircraft communications. This increases the resilience of communications, and would facilitate device-device communications that may be exploited for collision avoidance, or synchronised formation flying.

### 6.3.4 Wi-Fi

Wi-Fi capability can be incorporated into the EMM to facilitate localised communications between a vehicle and its starting location, its destination when arrived, or between two or more vehicles.

### 6.3.5 ADS-B

ADS-B is used as a communications method in manned aircraft, and is being adapted for use by unmanned aircraft. ADS-B could be used as a mechanism for SIAM. Some adaption may be required to harden the technology with respect to security to avoid spoofing for example.

### 6.3.6 Mesh Network coordinated/optimised by SIAM

- Utilisation of multiple devices and different air interfaces to create a robust flying mesh network; a network of vehicles with communication capability can be configured to communicate with each other, and to also set up pass through communications channels - a mesh network. SIAM as a central coordinating system, is ideally place to monitor and adjust communications parameter to optimise the mesh network performance.

### 6.4 Separation assurance and collision warning

### 6.4.1 Bubble concept - surround any object with a bubble (micro and nano no fly zones)

- Implementation of separation assurance and provision of collision warning is achieved by setting up "mini no-fly zones" around vehicles or objects. In this way standard no fly zone algorithms can be used for collision warning and separation assurance.
- The size of the bubble can be modified based on size and speed of aircraft, and the nature and accuracy of positioning system. Vehicle attributes will also have an impact on bubble size - highly sensitive vehicles, vehicles requiring high security, or highly volatile vehicles can all be provided with large bubbles.

### 6.4.2 Prioritisation - BLOS priority over LOS operations

It is envisaged that aircraft flying semi-autonomously on BLOS operations will be given priority if flying in common airspace - i.e. airspace outside of any specific BLOS corridor. LOS aircraft will be expected to give way to BLOS aircraft, and LOS pilots will be warned accordingly of BLOS vehicles nearby.

### 6.5 No Fly Zone management and implementation

### 6.5.1 Basic NFZs

Basic no fly zones are a set of geographical references which form a boundary. This boundary is then tested again location data for each nearby vehicle or object. Any vehicle or object approaching the NFZ is warned about a possible breach of the NFZ ahead. On breach SIAM takes the appropriate action given the nature of the breach.

### 6.5.2 Moving NFZs

Moving NFZs can be established around sensitive vehicles or objects, and around RPAS as part of collision avoidance and separation assurance applications. The principle is the same as per Basic NFZs except the geographical boundary is moving.

### 6.5.3 Dynamic NFZs (shape, radius, structure...)

In some instances it may be necessary to dynamically change the shape or nature of a NFZ. Due to the nature of SIAM and how the system works, a dynamic NFZ is managed in the same way as a basic or moving NFZ. The boundary of the NFZ is tested against the location of nearby vehicles.

## Claims

1. A secure integrated airspace management system, the secure integrated airspace management system including one or more secure global registries or databases storing:
(i) unique digital aircraft identification numbers ("aircraft IDs");
(ii) details of each registered owner of an aircraft ("owner IDs");
(iii) details of each pilot of an aircraft ("pilot IDs");
in which the secure integrated airspace management system is configured to receive, prior to a flight, data from an authentication module in an aircraft declaring the identity of its pilot ("pilot ID") and the identity of the aircraft ("aircraft ID"), in which the aircraft ID is an International Mobile Equipment Identity based format number;
and the secure integrated airspace management system is configured to then validate and authenticate the aircraft against information stored in the secure global registries or databases and to send a signal authorizing the aircraft to fly, and without which that aircraft is not permitted to fly; and in which the secure integrated airspace management system is configured to receive, from a communications module in each aircraft it has validated and authenticated, location data, such as the heading, position, speed and altitude, so that the secure integrated airspace management system can track all of these aircraft.

2. The secure integrated airspace management system of Claim 1, in which the secure integrated airspace management system is configured to receive and log regular transmissions including pilot ID, and aircraft ID, and aircraft position, heading, speed and altitude.

3. The secure integrated airspace management system of any preceding Claim, in which the secure integrated airspace management system is configured to send aircraft identification, and aircraft location (including position, heading, speed and altitude) data to an airspace or air traffic management system.

4. The secure integrated airspace management system of any preceding Claim, in which the secure integrated airspace management system is connected to a radar system that detects all aircraft in a region and provides to the radar system location information for all aircraft which it has authenticated, enabling the radar system to determine any aircraft which are not authenticated.

5. The secure integrated airspace management system of any preceding Claim, in which the secure integrated airspace management system processes cellular communications between the secure integrated airspace management system and the communications module and detects attempted jamming of cellular communications with the aircraft, and if jamming is detected, then the secure integrated airspace management system stores information relating to the jamming signal, including one or more of: location, timing, field strength.

6. The secure integrated airspace management system of any preceding Claim, in which the pilot ID is an International Mobile Subscriber Identity based format number.

7. The secure integrated airspace management system of any preceding Claim, in which the secure integrated airspace management system is configured to send a SMS message, to an operator of the aircraft, wherein the aircraft is an unmanned aircraft, if the aircraft approaches a pre-defined distance of a no fly zone.

8. The secure integrated airspace management system of any preceding Claim, in which the airspace management system records all incidents affecting an aircraft, such as airspace breaches.

9. A system including the secure integrated airspace management system of any preceding Claim, the system including the aircraft.

10. The system of Claim 9, in which the authentication module and the communications module are parts of an embedded mobile module.

11. The system of Claim 10, in which the embedded mobile module must be registered with the secure integrated airspace management system and activated in order to be operational and the embedded mobile module must be both present in the aircraft and validated and authenticated by the secure integrated airspace management system.

12. The system of any of Claims 9 to 11, in which the authentication module reads the aircraft ID and the pilot ID and sends that data, or encrypted versions of that data, to the secure integrated airspace management system, and in which the secure integrated airspace management system checks the aircraft ID and the pilot ID and, if validated, sends an authentication signal to the authentication module via the communications module.

13. The system of any of Claims 9 to 12, in which a local, aircraft-based airspace management system application is on a Subscriber Identification Module (SIM) card, contained within the authentication module and shares the same security level as a Global System for Mobile Communication (GSM) application, or other cellular communications application, on the SIM card.

14. The system of any of Claims 9 to 13, in which a local, aircraft-based airspace management system application is used to validate and authenticate the pilot to the secure integrated airspace management system.

15. The system of any of Claims 9 to 14, in which the secure integrated airspace management system is configured to store an updateable list of hard and soft no fly zones for each aircraft it is tracking.

16. The system of any of Claims 9 to 15, in which the communications module interfaces with, or is integral with, or uses or enables the use of location data from, one or more of the following: a Global Positioning System (GPS) or Global Navigation Satellite System (GNSS) location module in the aircraft; Global System for Mobile Communication (GSM) or other cellular standard tower mapping data; Wi-Fi or other wireless data standard mapping data; Bluetooth and Long-range ("LoRA") mapping data.

17. The system of any of Claims 9 to 16, in which the communications module uses wireless communication protocols such as WiFi, Long-range ("LoRa"), satellite or cellular such as a 2G, 3G, 4G, or 5G.

## Patentansprüche

1. Sicheres integriertes Luftraumverwaltungssystem, wobei das sichere integrierte Luftraumverwaltungssystem ein oder mehrere sichere globale Register oder Datenbanken umfasst, die Folgendes speichern:
(i) eindeutige digitale Flugzeug-Identifikationsnummern ("Flugzeug-IDs");
(ii) Einzelheiten zu jedem registrierten Eigentümer eines Flugzeugs ("Eigentümer-IDs");
(iii) Einzelheiten zu jedem Piloten eines Flugzeugs ("Piloten-IDs");
wobei das sichere integrierte Luftraumverwaltungssystem dazu konfiguriert ist, vor einem Flug von einem Authentifizierungsmodul in einem Flugzeug Daten zu empfangen, das die Identität seines Piloten ("Piloten-ID") und die Identität des Flugzeugs ("Flugzeug-ID") angeben, wobei die Flugzeug-ID eine auf der International Mobile Equipment Identity basierende Formatnummer ist;
und das sichere integrierte Luftraumverwaltungssystem dazu konfiguriert ist, das Flugzeug dann anhand von Informationen, die in den sicheren globalen Registern oder Datenbanken gespeichert sind, zu validieren und zu authentifizieren und ein Signal zu senden, das das Flugzeug zum Fliegen autorisiert und ohne das dem Flugzeug nicht erlaubt wird, zu fliegen; und wobei das sichere integrierte Luftraumverwaltungssystem dazu konfiguriert ist, von einem Kommunikationsmodul in jedem Flugzeug, das es validiert und authentifiziert hat, Standortdaten, wie den Kurs, die Position, die Geschwindigkeit und die Höhe zu empfangen, so dass das sichere integrierte Luftraumverwaltungssystem alle diese Flugzeuge verfolgen kann.

2. Sicheres integriertes Luftraumverwaltungssystem nach Anspruch 1, wobei das sichere integrierte Luftraumverwaltungssystem dazu konfiguriert ist, regelmäßige Übertragungen, die die Piloten-ID und Flugzeug-ID sowie Position, Kurs, Geschwindigkeit und Höhe des Flugzeugs umfassen, zu empfangen und zu protokollieren.

3. Sicheres integriertes Luftraumverwaltungssystem nach einem der vorhergehenden Ansprüche, wobei das sichere integrierte Luftraumverwaltungssystem dazu konfiguriert ist, Flugzeug-Identifikations- und Flugzeug-Standortdaten (einschließlich Position, Kurs, Geschwindigkeit und Höhe) an ein Luftraum- oder Flugverkehrsverwaltungssystem zu senden.

4. Sicheres integriertes Luftraumverwaltungssystem nach einem der vorhergehenden Ansprüche, wobei das sichere integrierte Luftraumverwaltungssystem mit einem Radarsystem verbunden ist, das alle Flugzeuge in einer Region erfasst, und dem Radarsystem Standortinformationen für alle Flugzeuge bereitstellt, die es authentifiziert hat, wodurch dem Radarsystem ermöglicht wird, alle Flugzeuge zu bestimmen, die nicht authentifiziert sind.

5. Sicheres integriertes Luftraumverwaltungssystem nach einem der vorhergehenden Ansprüche, wobei das sichere integrierte Luftraumverwaltungssystem die zellularen Kommunikationen zwischen dem sicheren integrierten Luftraumverwaltungssystem und dem Kommunikationsmodul verarbeitet und den Versuch einer Störung der zellularen Kommunikationen mit dem Flugzeug erkennt, und wenn eine Störung erkannt wird, das sichere integrierte Luftraumverwaltungssystem dann Informationen in Bezug auf das Störsignal speichert, die eines oder mehrere umfassen von: Standort, Zeit, Feldstärke.

6. Sicheres integriertes Luftraumverwaltungssystem nach einem der vorhergehenden Ansprüche, wobei die Piloten-ID eine auf der International Mobile Subscriber Identity basierende Formatnummer ist.

7. Sicheres integriertes Luftraumverwaltungssystem nach einem der vorhergehenden Ansprüche, wobei das sichere integrierte Luftraumverwaltungssystem dazu konfiguriert ist, eine SMS-Nachricht an einen Bediener des Flugzeugs zu senden, wobei das Flugzeug ein unbemanntes Flugzeug ist, wenn sich das Flugzeug einem vordefinierten Abstand von einer Flugverbotszone nähert.

8. Sicheres integriertes Luftraumverwaltungssystem nach einem der vorhergehenden Ansprüche, wobei das Luftraumverwaltungssystem alle ein Flugzeug betreffende Vorfälle, wie etwa Luftraumverletzungen, aufzeichnet.

9. System, umfassend das sichere integrierte Luftraumverwaltungssystem nach einem der vorhergehenden Ansprüche, wobei das System das Flugzeug umfasst.

10. System nach Anspruch 9, wobei das Authentifizierungsmodul und das Kommunikationsmodul Teile eines eingebetteten mobilen Moduls sind.

11. System nach Anspruch 10, wobei das eingebettete mobile Modul in dem sicheren integrierten Luftraumverwaltungssystem registriert und aktiviert werden muss, um betriebsbereit zu sein, und das eingebettete mobile Modul sowohl im Flugzeug vorhanden als auch durch das sichere integrierte Luftraumverwaltungssystem validiert und authentifiziert sein muss.

12. System nach einem der Ansprüche 9 bis 11, wobei das Authentifizierungsmodul die Flugzeug-ID und die Piloten-ID liest und diese Daten oder verschlüsselte Versionen dieser Daten an das sichere integrierte Luftraumverwaltungssystem sendet, und wobei das sichere integrierte Luftraumverwaltungssystem die Flugzeug-ID und die Piloten-ID prüft und bei Validierung ein Authentifizierungssignal an das Authentifizierungsmodul über das Kommunikationsmodul sendet.

13. System nach einem der Ansprüche 9 bis 12, wobei sich eine lokale, flugzeugbasierte Luftraumverwaltungssystemanwendung auf einer SIM-Karte (Subscriber Identification Module) befindet, die im Authentifizierungsmodul enthalten ist und dieselbe Sicherheitsstufe wie eine GSM-Anwendung (Global System for Mobile Communication) oder eine andere zellulare Kommunikationsanwendung auf der SIM-Karte aufweist.

14. System nach einem der Ansprüche 9 bis 13, wobei eine lokale, flugzeugbasierte Luftraumverwaltungssystemanwendung zur Validierung und Authentifizierung des Piloten gegenüber dem sicheren integrierten Luftraumverwaltungssystem verwendet wird.

15. System nach einem der Ansprüche 9 bis 14, wobei das sichere integrierte Luftraumverwaltungssystem dazu konfiguriert ist, eine aktualisierbare Liste von harten und weichen Flugverbotszonen für jedes von ihm verfolgte Flugzeug zu speichern.

16. System nach einem der Ansprüche 9 bis 15, wobei das Kommunikationsmodul eine Schnittstelle bildet mit, oder integriert ist in, oder Standortdaten verwendet oder deren Verwendung ermöglicht von einem oder mehreren von: einem Standortmodul des Global Positioning System (GPS) oder des Global Navigation Satellite System (GNSS) in dem Flugzeug; Kartierungsdaten von Türmen des Global System for Mobile Communication (GSM) oder eines anderen Mobilfunkstandards; Kartierungsdaten von Wi-Fi oder eines anderen drahtlosen Datenstandards; Kartierungsdaten von Bluetooth und Long-Range ("LoRa").

17. System nach einem der Ansprüche 9 bis 16, wobei das Kommunikationsmodul drahtlose Kommunikationsprotokolle, wie etwa WiFi, Long-range ("LoRa"), Satelliten- oder Mobilfunkstandards, wie 2G, 3G, 4G oder 5G verwendet.

## Revendications

1. Système intégré sécurisé de gestion d'espace aérien, le système intégré sécurisé de gestion d'espace aérien comportant un(e) ou plusieurs registres ou bases de données mondiaux sécurisés stockant :
(i) des numéros uniques d'identification numérique d'aéronef (« ID d'aéronef ») ;
(ii) des détails de chaque propriétaire enregistré d'un aéronef (« ID de propriétaire ») ;
(iii) des détails de chaque pilote d'un aéronef (« ID de pilote ») ;
dans lequel le système intégré sécurisé de gestion d'espace aérien est configuré pour recevoir, préalablement à un vol, des données provenant d'un module d'authentification dans un aéronef déclarant l'identité de son pilote (« ID de pilote ») et l'identité de l'aéronef (« ID d'aéronef »), dans lequel l'ID d'aéronef est un numéro de format basé sur l'Identité Internationale d'Équipement Mobile ; et
le système intégré sécurisé de gestion d'espace aérien est configuré pour ensuite valider et authentifier l'aéronef par rapport aux informations stockées dans les registres ou bases de données mondiaux sécurisés et pour envoyer un signal autorisant l'aéronef à voler, et sans lequel cet aéronef n'est pas autorisé à voler ; et dans lequel le système intégré sécurisé de gestion d'espace aérien est configuré pour recevoir, d'un module de communication de chaque aéronef qu'il a validé et authentifié, des données de localisation, telles que le cap, la position, la vitesse et l'altitude, afin que le système intégré sécurisé de gestion d'espace aérien puisse suivre tous ces aéronefs.

2. Système intégré sécurisé de gestion d'espace aérien selon la revendication 1, dans lequel le système intégré sécurisé de gestion d'espace aérien est configuré pour recevoir et enregistrer des transmissions régulières comportant un ID de pilote et un ID d'aéronef, et une position, un cap, une vitesse et une altitude d'aéronef.

3. Système intégré sécurisé de gestion d'espace aérien selon une quelconque revendication précédente, dans lequel le système intégré sécurisé de gestion d'espace aérien est configuré pour envoyer des données d'identification d'aéronef et de localisation d'aéronef (y compris la position, le cap, la vitesse et l'altitude) à un système de gestion d'espace aérien ou de trafic aérien.

4. Système intégré sécurisé de gestion d'espace aérien selon une quelconque revendication précédente, dans lequel le système intégré sécurisé de gestion d'espace aérien est connecté à un système radar qui détecte tous les aéronefs dans une région et fournit au système radar des informations de localisation pour tous les aéronefs qu'il a authentifiés, permettant au système radar de déterminer les aéronefs qui ne sont pas authentifiés.

5. Système intégré sécurisé de gestion d'espace aérien selon une quelconque revendication précédente, dans lequel le système intégré sécurisé de gestion d'espace aérien traite des communications cellulaires entre le système intégré sécurisé de gestion d'espace aérien et le module de communication et détecte une tentative de brouillage de communications cellulaires avec l'aéronef, et si un brouillage est détecté, le système intégré sécurisé de gestion d'espace aérien stocke alors les informations relatives au signal de brouillage, y compris un ou plusieurs parmi : l'emplacement, le moment, l'intensité de champ.

6. Système intégré sécurisé de gestion d'espace aérien selon une quelconque revendication précédente, dans lequel l'ID de pilote est un numéro de format basé sur l'Identité Internationale d'Abonné Mobile.

7. Système intégré sécurisé de gestion d'espace aérien selon une quelconque revendication précédente, dans lequel le système intégré sécurisé de gestion d'espace aérien est configuré pour envoyer un message SMS, à un opérateur de l'aéronef, dans lequel l'aéronef est un aéronef sans pilote, si l'aéronef s'approche d'une distance prédéfinie d'une zone d'exclusion aérienne.

8. Système intégré sécurisé de gestion d'espace aérien selon une quelconque revendication précédente, dans lequel le système de gestion d'espace aérien enregistre tous les incidents affectant un aéronef, tels que les violations d'espace aérien.

9. Système comportant le système intégré sécurisé de gestion d'espace aérien selon une quelconque revendication précédente, le système comportant l'aéronef.

10. Système selon la revendication 9, dans lequel le module d'authentification et le module de communication font partie d'un module mobile embarqué.

11. Système selon la revendication 10, dans lequel le module mobile embarqué doit être enregistré auprès du système intégré sécurisé de gestion d'espace aérien et activé pour être opérationnel et le module mobile embarqué doit être à la fois présent dans l'aéronef et validé et authentifié par le système intégré sécurisé de gestion d'espace aérien.

12. Système selon l'une quelconque des revendications 9 à 11, dans lequel le module d'authentification lit l'ID d'aéronef et l'ID de pilote et envoie ces données, ou des versions cryptées de ces données, au système intégré sécurisé de gestion d'espace aérien, et dans lequel le système intégré sécurisé de gestion d'espace aérien vérifie l'ID d'aéronef et l'ID de pilote et, s'ils sont validés, envoie un signal d'authentification au module d'authentification via le module de communication.

13. Système selon l'une quelconque des revendications 9 à 12, dans lequel une application locale de système de gestion d'espace aérien embarquée dans un aéronef se trouve sur une carte de Module d'Identification d'Abonné (SIM), contenue dans le module d'authentification et partage le même niveau de sécurité qu'une application de Système Mondial de Communication Mobile (GSM) ou toute autre application de communication cellulaire sur la carte SIM.

14. Système selon l'une quelconque des revendications 9 à 13, dans lequel une application locale de système de gestion d'espace aérien embarquée dans un aéronef est utilisée pour valider et authentifier le pilote auprès du système intégré sécurisé de gestion d'espace aérien.

15. Système selon l'une quelconque des revendications 9 à 14, dans lequel le système intégré sécurisé de gestion d'espace aérien est configuré pour stocker une liste pouvant être mise à jour de zones d'exclusion aérienne matérielles et logicielles pour chaque aéronef qu'il suit.

16. Système selon l'une quelconque des revendications 9 à 15, dans lequel le module de communication s'interface avec, ou fait partie intégrante de, ou utilise ou permet l'utilisation de données de localisation provenant d'un ou de plusieurs de ce qui suit : un module de localisation de Système de Positionnement Mondial (GPS) ou de Système Mondial de Navigation par Satellite (GNSS) dans l'aéronef ; des données de cartographie de Système Mondial de Communication Mobile (GSM) ou d'autre tour cellulaire standard ; des données standards de cartographie Wi-Fi ou d'autres données sans fil ; des données de cartographie Bluetooth et de Longue portée (« LoRa »).

17. Système selon l'une quelconque des revendications 9 à 16, dans lequel le module de communication utilise des protocoles de communication sans fil tels que WiFi, Longue portée (« LoRa »), par satellite ou cellulaires tels que 2G, 3G, 4G ou 5G.
